# EUROPEAN PATENT APPLICATION

(11) **EP 4 738 057 A1**
(43) Date of publication of application: **06.05.2026**
(21) Application number: 25725153.8
(22) Date of filing: 14.05.2025
(51) Int. Cl.: G06F 1/16

(54) **PROTECTIVE MEMBER AND ELECTRONIC DEVICE COMPRISING SAME**

(30) Priority: 29.07.2024 KR 20240100283; 05.09.2024 KR 20240120599
(71) Applicant: Samsung Electronics Co., Ltd, Suwon-si, Gyeonggi-do 16677 (KR)
(72) Inventor: BAEK, Moohyun, Suwon-si Gyeonggi-do 16677 (KR); MOON, Heecheul, Suwon-si Gyeonggi-do 16677 (KR); SON, Kwonho, Suwon-si Gyeonggi-do 16677 (KR); CHOI, Jongchul, Suwon-si Gyeonggi-do 16677 (KR)
(74) Representative: Gulde & Partner
(86) International application number: PCT/KR2025/006528
(87) International publication number: WO 2026/029335

(57) **Abstract**

A foldable electronic device according to an embodiment of the disclosure comprises a housing including a first housing component and a second housing component, a hinge rotatably connecting the first housing component and second housing component, a flexible display supported by the first housing component and the second housing component, a first protective member disposed on the first housing component to cover a first edge portion of the flexible display, and a second protective member disposed on the second housing component to cover a second edge portion of the flexible display . The first protective member comprises a first fiber-reinforced portion including a plurality of first fiber layers laminated together, each of the first fiber layers having a first thickness, and a second fiber-reinforced portion extending from the first fiber-reinforced portion, the second fiber-reinforced portion including a plurality of second fiber layers laminated together, each of the second fiber layers having a second thickness smaller than the first thickness. The second protective member comprises a third fiber-reinforced portion including a plurality of third fiber layers laminated together and a fourth fiber-reinforced portion extending from the third fiber-reinforced portion, the fourth fiber-reinforced portion including a plurality of fourth fiber layers laminated together. When the foldable electronic device is folded, the second fiber-reinforced portion of the first protective member and the fourth fiber-reinforced portion of the second protective member are configured to contact each other.

## Description

### [Technical Field]

The disclosure relates to a protective member and an electronic device including the same.

### [Background Art]

Developments in electronics, information, and communication technology include integrations of various functionalities into a single electronic device or portable communication device. For example, smartphones pack the functionalities of a sound player, photographing device, and scheduler, as well as the communication functionality and, on top of that, may implement more various functions by having applications installed thereon.

As smartphones or other personal/portable communication devices spread, users' demand for portability and use convenience is on the rise. For example, a touchscreen display may not only serve as an output device of visual information but also provide a virtual keyboard that replaces a mechanical input device (e.g., a button input device). As such, portable communication devices or electronic devices may be made compact while delivering further enhanced applicability (e.g., a larger screen). Flexible displays, e.g., foldable or rollable displays, will be more commercially available, and electronic devices are expected to deliver better portability and use convenience.

The above-described information may be provided as related art for the purpose of helping understanding of the disclosure. No claim or determination is made as to whether any of the foregoing is applicable as background art in relation to the disclosure.

### [Disclosure of Invention]

### [Solution to Problems]

A foldable electronic device, according to an embodiment of the disclosure, comprises a housing including a first housing component and a second housing component, a hinge rotatably connecting the first housing component and second housing component, a flexible display supported by the first housing component and the second housing component, a first protective member disposed on the first housing component to cover a first edge portion of the flexible display, and a second protective member disposed on the second housing component to cover a second edge portion of the flexible display. The first protective member comprises a first fiber-reinforced portion including a plurality of first fiber layers laminated together, each of the first fiber layers having a first thickness, and a second fiber-reinforced portion extending from the first fiber-reinforced portion, the second fiber-reinforced portion including a plurality of second fiber layers laminated together, each of the second fiber layers having a second thickness smaller than the first thickness. The second protective member comprises a third fiber-reinforced portion including a plurality of third fiber layers laminated together and a fourth fiber-reinforced portion extending from the third fiber-reinforced portion, the fourth fiber-reinforced portion including a plurality of fourth fiber layers laminated together. When the foldable electronic device is folded, the second fiber-reinforced portion of the first protective member and the fourth fiber-reinforced portion of the second protective member are configured to contact each other.

A foldable electronic device according to an embodiment may comprise a housing including a first housing component and a second housing component, a hinge connecting the first housing component and second housing component so that the second housing component is rotatable about the first housing component, a flexible display supported by the first housing component and the second housing component, a first protective member disposed on the first housing component to cover a first edge portion of the flexible display, and a second protective member disposed on the second housing component to cover a second edge portion of the flexible display. At least one of the first protective member or the second protective member may include a first portion positioned inside the housing and including a first material and a second portion extending from one end of the first portion, forming an exterior of the electronic device, and including a second material different from the first member.

The disclosure is not limited to the foregoing embodiments and various modifications or changes may be made thereto without departing from the spirit and scope of the disclosure.

### [Brief Description of Drawings]

FIG. 1 is a block diagram illustrating an electronic device in a network environment according to an embodiment of the disclosure;
FIG. 2 is a view illustrating an unfolded state of an electronic device according to an embodiment of the disclosure;
FIG. 3 is a view illustrating a folded state of an electronic device according to an embodiment of the disclosure;
FIG. 4 is an exploded perspective view illustrating an electronic device according to an embodiment of the disclosure;
FIG. 5 is an exploded perspective view illustrating an example housing, an example flexible display, and an example protective member of an electronic device according to one or more embodiment(s);
FIG. 6 is a perspective view illustrating a portion of a protective member of an electronic device according to an embodiment of the disclosure;
FIG. 7 is a cross-sectional view of the electronic device, taken along A-A' of FIG. 2 according to an embodiment of the disclosure;
FIG. 8 is an enlarged view illustrating the protective member of FIG. 7 according to an embodiment of the disclosure;
FIG. 9 is an enlarged view illustrating a partial area S of the protective member of FIG. 8, showing laminated layers forming a protective member according to an embodiment of the disclosure;
FIG. 10 is a cross-sectional view illustrating a portion of a protective member in which an inner portion thereof is bent according to an embodiment of the disclosure;
FIG. 11 is a cross-sectional view illustrating a portion of a protective member with a blocking layer is disposed according to an embodiment of the disclosure;
FIG. 12 is a flowchart illustrating a process of manufacturing a protective member according to an embodiment of the disclosure;
FIG. 13 is a flowchart illustrating in detail a process for a second fiber-reinforced portion of a protective member, of the flowchart of FIG. 12 according to an embodiment of the disclosure;
FIG. 14 is a flowchart illustrating in detail a process for a second fiber-reinforced portion of a protective member, of the flowchart of FIG. 12 according to an embodiment of the disclosure;
FIG. 15 is a flowchart illustrating a process for a protective member according to an embodiment of the disclosure; and
FIG. 16 is a flowchart illustrating a process for a protective member according to an embodiment of the disclosure.

Reference may be made to the accompanying drawings in the following description, and specific examples that may be practiced are shown as examples within the drawings. Other examples may be utilized and structural changes may be made without departing from the scope of the various examples.

### [Mode for the Invention]

The electronic device according to embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

An embodiment of the disclosure and terms used therein are not intended to limit the technical features described in the disclosure to specific embodiments, and should be understood to include various modifications, equivalents, or substitutes of the embodiment. With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

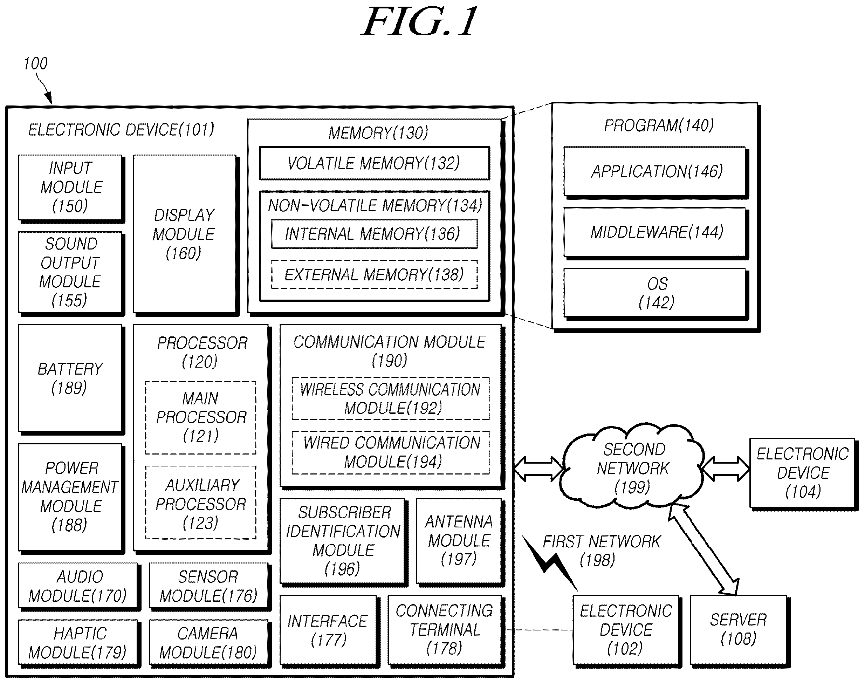

FIG. 1 is a block diagram illustrating an example electronic device in a network environment according to an embodiment of the disclosure.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. In an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. The sensor module 176 may include, e.g., a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

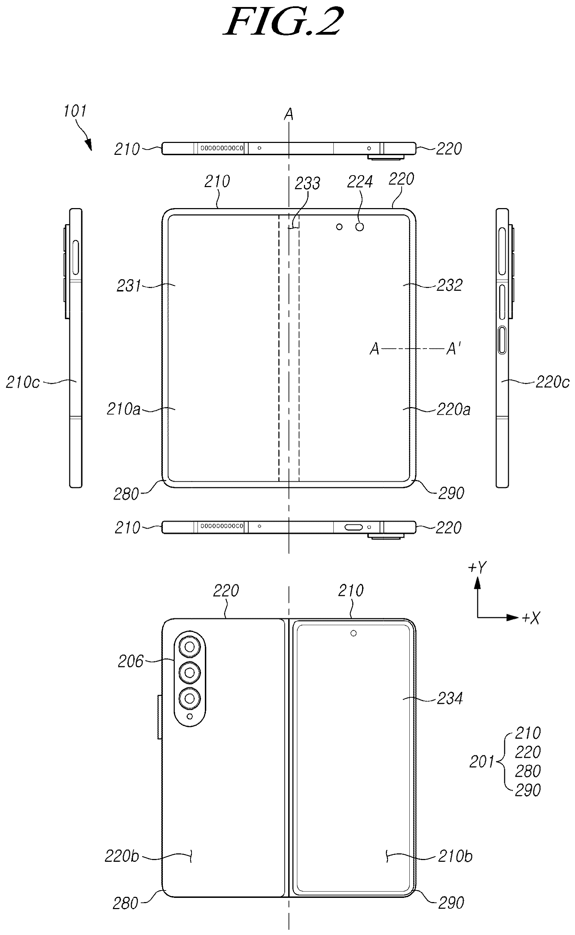

FIG. 2 is a view illustrating an unfolded state of an electronic device according to an embodiment of the disclosure.

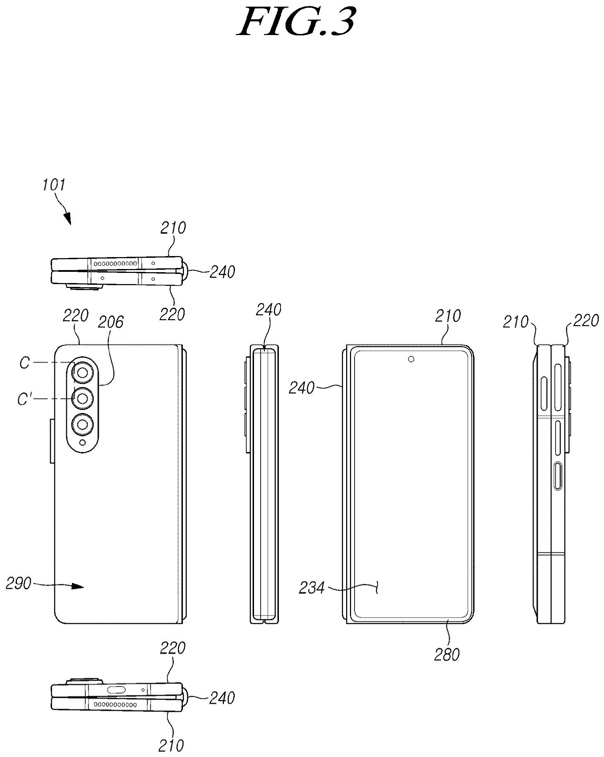

FIG. 3 is a view illustrating a folded state of an electronic device according to an embodiment of the disclosure.

Referring to FIGS. 2 and 3, an electronic device 101 may include a housing 201, a hinge cover 240 covering a foldable portion of the housing 201, and a display 230 disposed in a space formed by the housing 201. According to an embodiment, the surface, where the screen output from the display 230 is exposed, is defined as a front surface (e.g., the first front surface 210a and the second front surface 220a) of the electronic device 101. A surface opposite to the front surface is defined as a rear surface (e.g., the first rear surface 210b and the second rear surface 220b) of the electronic device 101. Further, a surface surrounding the space between the front surface and the rear surface is defined as a side surface (e.g., the first side surface 210c and the second side surface 220c) of the electronic device 101. The side surface of the electronic device 101 may be a side surface of at least one of the first housing 210 or the second housing 220.

The electronic device 101 of FIGS. 2 and 3 may be referred to as a foldable electronic device, a portable electronic device, or a portable foldable electronic device. According to an embodiment, the housing 201 may be referred to as a foldable housing. The display 230 may be referred to as a "flexible display."

According to an embodiment, the housing 201 may include a first housing 210, a second housing 220 rotatable with respect to the first housing 210, a first rear cover 280, and a second rear cover 290. The housing 201 of the electronic device 101 are not limited to the shape and coupling shown in FIGS. 2 and 3 but may be implemented in other shapes or via a combination and/or coupling of other components. For example, in an embodiment, the first housing 210 and the first rear cover 280 may be integrally formed with each other, and the second housing 220 and the second rear cover 290 may be integrally formed with each other. In an embodiment, the first housing 210 may be referred to as a first housing component, and the second housing 220 may be referred to as a second housing component.

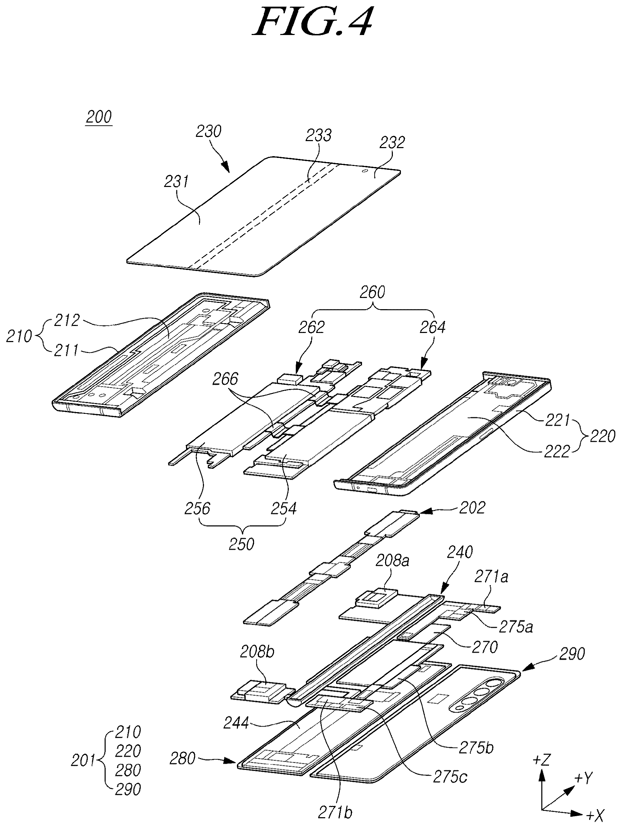

According to an embodiment, the first housing 210 may be connected to a hinge structure (e.g., a hinge 202 of FIG. 4) and may include a first front surface 210a facing in a first direction and a first rear surface 210b facing in a second direction opposite to the first direction. The second housing 220 may be connected to the hinge (or hinge assembly) 202 and may include a second front surface 220a facing in a third direction and a second rear surface 220b facing in a fourth direction opposite to the third direction, and may rotate from the first housing 210 about the hinge 202. Accordingly, the electronic device 101 may be changed to a folded state or an unfolded (or flat) state. In the folded state of the electronic device 101, the first front surface 210a may face the second front surface 220a and, in the unfolded state, the third direction may be identical to the first direction. Hereinafter, unless otherwise mentioned, directions are described based on the unfolded state of the electronic device 101.

According to an embodiment, the first housing 210 and the second housing 220 are disposed on two opposite sides of the folding axis A and be overall symmetrical in shape with respect to the folding axis A. As set forth below, the first housing 210 and the second housing 220 may have different angles or distances formed therebetween depending on whether the electronic device 101 is in the unfolded, folded, or intermediate state. According to an embodiment, the second housing 220 further includes the sensor area 224 where sensors (e.g., front camera) are disposed, but in the remaining area (e.g., the area without sensors), the second housing 220 may be symmetrical in shape with the first housing 210.

According to an embodiment, there may be provided a plurality of (e.g., two) folding axes A parallel to each other. In the disclosure, the folding axis A is provided along the length direction (Y-axis direction) of the electronic device 101, but the direction of the folding axis A is not limited thereto. For example (not shown), the electronic device 101 may include the folding axis A extending along the width direction (e.g., X-axis direction).

According to an embodiment, the electronic device 101 may include a structure to which a digital pen may be attached. For example, the electronic device 101 may include a magnetic substance configured to attach the digital pen to a side surface of the first housing 210 or a side surface of the second housing 220. According to an embodiment, the electronic device 101 may include a structure into which a digital pen may be inserted. For example, a hole (not shown) into which the digital pen may be inserted may be formed in a side surface of the first housing 210 or a side surface of the second housing 220 of the electronic device 101.

According to an embodiment, the first housing 210 and the second housing 220 may at least partially be formed of a metal or non-metallic material with a rigidity selected to support the display 230. At least a portion formed of metal may provide a ground plane of the electronic device 101 and may be electrically connected with a ground line formed on a printed circuit board (e.g., the circuit board 260 of FIG. 4).

According to an embodiment, the sensor area 224 may be formed adjacent to an edge or corner of the second housing 220 and have a predetermined area. However, the placement, shape, or size of the sensor area 224 is not limited to those illustrated. According to an embodiment, the sensor area 224 may be provided in a different corner of the second housing 220 or in any area between the top corner and the bottom corner or in the first housing 210. In an embodiment, components for performing various functions, embedded in the electronic device 101, may be exposed through the sensor area 224 or one or more openings in the sensor area 224 to the front surface of the electronic device 101. In various embodiments, the components may include various kinds of sensors. The sensor may include, e.g., at least one of a front camera, a receiver, or a proximity sensor.

According to an embodiment, the first rear cover 280 may be disposed on one side of the folding axis A on the rear surface of the electronic device 101 and have, e.g., a substantially rectangular periphery which may be surrounded by the first housing 210. Similarly, the second rear cover 290 may be disposed on the opposite side of the folding axis A on the rear surface of the electronic device 101 and its periphery may be surrounded by the second housing 220.

According to an embodiment, the first rear cover 280 and the second rear cover 290 may be substantially symmetrical in shape with respect to the folding axis (axis A). However, the first rear cover 280 and the second rear cover 290 are not necessarily symmetrical in shape. According to an embodiment, the electronic device 101 may include the first rear cover 280 and the second rear cover 290 in various shapes.

According to an embodiment, the first rear cover 280, the second rear cover 290, the first housing 210, and the second housing 220 may form a space where various components (e.g., a printed circuit board or battery) of the electronic device 101 may be disposed. According to an embodiment, one or more components may be arranged or visually exposed on/through the rear surface of the electronic device 101. For example, at least a portion of a sub display (e.g., the sub display 244 of FIG. 4) may be visually exposed through at least a portion of the first rear cover 280. According to an embodiment, one or more components or sensors may be visually exposed through at least a portion of the first rear cover 290. According to various embodiments, the sensor may include a proximity sensor and/or a camera module 206 (e.g., rear camera).

According to an embodiment, a front camera exposed on the front surface of the electronic device 101 through one or more openings provided in the sensor area 224 or the camera module 206 exposed through at least a portion of the second rear cover 290 may include one or more lenses, an image sensor, and/or an image signal processor. In an embodiment, two or more lenses (infrared camera, wide-angle and telephoto lens) and image sensors may be disposed on one surface of the electronic device 101.

According to an embodiment, the hinge cover 240 may be disposed between the first housing 210 and the second housing 220 to hide the internal components (e.g., the hinge 202 of FIG. 4). According to an embodiment, the hinge cover 240 may be hidden by a portion of the first housing 210 and second housing 220 or be exposed to the outside depending on the state (e.g., the unfolded state (e.g., flat state) or folded state) of the electronic device 101.

According to an embodiment, as shown in FIG. 2, in the unfolded state of the electronic device 101, the hinge cover 240 may be hidden, and thus not exposed, by the first housing 210 and the second housing 220. According to an embodiment, as shown in FIG. 3, in the folded state (e.g., a fully folded state) of the electronic device 101, the hinge cover 240 may be exposed to the outside between the first housing 210 and the second housing 220. According to an embodiment, in an intermediate state in which the first housing 210 and the second housing 220 are folded with a certain angle, the hinge cover 240 may be partially exposed to the outside between the first housing 210 and the second housing 220. However, in this case, the exposed area may be smaller than the area of the completely folded state. In an embodiment, the hinge cover 240 may include a curved surface.

According to an embodiment, the display 230 may be disposed in a space formed by the housing 201. For example, the display 230 may be seated on a recess formed by the housing 201 and may occupy most of the front surface of the electronic device 101. Thus, the front surface of the electronic device 101 may include the display 230 and a partial area of the first housing 210 and a partial area of the second housing 220, which are adjacent to the display 230. The rear surface of the electronic device 101 may include a first rear cover 280, a partial area of the first housing 210 adjacent to the first rear cover 280, a second rear cover 290, and a partial area of the second housing 220 adjacent to the second rear cover 290.

According to an embodiment, the display 230 may include a plurality of displays spaced apart from each other. For example, the display 230 may include a first display area 231 disposed on the first housing 210 and a second display area 232 disposed on the second housing 220. According to an embodiment, the first display area 231 and the second display area 232 may rotate about the folding axis A.

According to an embodiment, the display 230 may mean a display at least a portion of which may be transformed into a flat or curved surface. For example, the display 230 may be a foldable or flexible display. According to an embodiment, the display 230 may include a folding area 233, a first display area 231 disposed on one side of the folding area 233 (e.g., the left side of the folding area 233 of FIG. 2), and a second display area 232 disposed on the opposite side of the folding area 233 (e.g., the right side of the folding area 203 of FIG. 2). However, the segmentation of the display 230 is merely an example, and the display 230 may be divided into a plurality of (e.g., four or more, or two) areas depending on the structure or function of the display 200. For example, in the embodiment illustrated in FIG. 2, the area of the display 230 may be divided by the folding area 233 or folding axis (i.e., axis A) extending parallel to the Y-axis. According to an embodiment, the display 230 may be divided into areas based on another folding area (e.g., a folding area parallel to the X-axis) or another folding axis (e.g., a folding axis parallel to the X-axis). According to an embodiment, the display 230 may be coupled with or disposed adjacent to a touch detection circuit, a pressure sensor capable of measuring the strength (pressure) of touches, and/or a digitizer (not shown) for detecting a magnetic field-type stylus pen.

According to an embodiment, the first display area 231 and the second display area 232 may be overall symmetrical in shape with respect to the folding area 233. According to an embodiment (not shown), unlike the first display area 231, the second display area 232 may include a notch depending on the presence of the sensor area 224, but the rest may be symmetrical in shape with the first display area 231. In other words, the first display area 231 and the second display area 232 may include symmetrical portions and asymmetrical portions.

Described below are the operation of the first housing 210 and the second housing 220 and each area of the display 230 depending on the state (e.g., the unfolded state (or flat state) and folded state) of the electronic device 101.

According to an embodiment, when the electronic device 101 is in the unfolded state (flat state) (e.g., FIG. 2), the first housing 210 and the second housing 220 may be disposed to face in the same direction while being angled substantially at 180 degrees therebetween. The surface of the first display area 231 and the surface of the second display area 232 of the display 230 may be angled at 180 degrees therebetween while facing in the same direction (e.g., forward of the front surface of the electronic device). The folding area 233 may form the same plane with the first display area 231 and the second display area 232.

According to an embodiment, when the electronic device 101 is in the folded state (e.g., FIG. 3), the first housing 210 and the second housing 220 may be disposed to face each other. The surface of the first display area 231 and the surface of the second display area 232 of the display 230 may be angled at a small angle (e.g., an angle between 0 degrees and 10 degrees) therefrom while facing each other. At least a portion of the folding area 233 may be formed as a curve having a predetermined curvature.

According to an embodiment, when the electronic device 101 is in the intermediate state (not shown), the first housing 210 and the second housing 220 may be disposed at a certain angle therebetween. The surface of the first display area 231 of the display 230 and the surface of the second display area 232 may form an angle which is greater than the angle in the folded state and smaller (e.g., shorter or less) than the angle in the unfolded state. The folding area 233 may at least partially have a curved surface with a predetermined curvature and, in this case, the curvature may be smaller (or shorter) than that when it is in the folded state.

FIG. 4 is an exploded perspective view illustrating an electronic device according to an embodiment of the disclosure.

Referring to FIG. 4, an electronic device 101 may include a housing 201, a display 230, a hinge (or hinge assembly) 202, a battery 250, and a board unit 260. The housing 201 may include a first housing 210, a second housing 220, a first rear cover 280, and a second rear cover 290. The configuration of the first housing 210, the second housing 220, the hinge cover 240, the first rear cover 280, and the second rear cover 290 of FIG. 4 may be identical in whole or part to the configuration of the first housing 210, the second housing 220, the hinge cover 240, the first rear cover 280, and the second rear cover 290 of FIG. 2 and/or FIG. 3. In an embodiment, the first housing 210 may be referred to as a first housing component, and the second housing 220 may be referred to as a second housing component.

According to an embodiment, the first housing 210 and the second housing 220 may be assembled together to be coupled to two opposite sides of the hinge 202. According to an embodiment, the first housing 210 may include a first supporting area 212 that may support the components (e.g., the first circuit board 262 and/or the first battery 252) of the electronic device 101 and a first sidewall 211 surrounding at least a portion of the first supporting area 212. The first sidewall 211 may include a first side surface (e.g., the first side surface 210c of FIG. 2) of the electronic device 101. According to an embodiment, the second housing 220 may include a second supporting area 222 that may support the components (e.g., the second circuit board 264 and/or the second battery 254) of the electronic device 101 and a second sidewall 221 surrounding at least a portion of the second supporting area 222. The second sidewall 221 may include a second side surface (e.g., the second side surface 220c of FIG. 2) of the electronic device 101.

According to an embodiment, the display 230 may include a first display area 231, a second display area 232, a folding area 233, and a sub display 244. The configuration of the first display area 231, the second display area 232, and the folding area 233 of FIG. 3 may be identical in whole or part to the configuration of the first display area 231, the second display area 232, and the folding area 233 of FIG. 1 and/or FIG. 2.

According to an embodiment, the sub display 244 may display screen in a different direction from the display areas 231 and 232. For example, the sub display 244 (e.g., 234 of FIGS. 2 and 3) may output screen in a direction opposite to the first display area 231. According to an embodiment, the sub display 244 may be disposed on the first rear cover 280.

According to an embodiment, the battery 250 may include a first battery 252 disposed in the first housing 210 and a second battery 254 disposed in the second housing 220. According to an embodiment, the first battery 252 may be connected with the first circuit board 262, and the second battery 254 may be connected to the second circuit board 264. According to an embodiment, the battery 250 may supply power to at least one component of the electronic device 101. According to an embodiment, the battery 250 may include, for example, a non-rechargeable primary cell, a rechargeable secondary cell, or a fuel cell.

According to an embodiment, the board unit 260 may include a first circuit board 262 disposed in the first housing 210 and a second circuit board 264 disposed in the second housing 220. According to an embodiment, the first circuit board 262 and the second circuit board 264 may be electrically connected by at least one flexible circuit board 266. According to an embodiment, at least a portion of the flexible circuit board 266 may be disposed across the hinge 202. According to an embodiment, the first circuit board 262 and the second circuit board 264 may be disposed in a space formed by the first housing 210, the second housing 220, the first rear cover 280, and the second rear cover 290. Components for implementing various functions of the electronic device 101 may be disposed on the first circuit board 262 and the second circuit board 264.

According to an embodiment, the electronic device 101 may include speakers 208a and 208b. According to an embodiment, the speakers 208a and 208b may convert the electric signal into sound. According to an embodiment, the speakers 208 and 208b may be disposed in a space formed by the first housing 210, the second housing 220, the first rear cover 280, and the second rear cover 290. According to an embodiment, the speakers 208a and 208b may include an upper speaker 208a positioned in an upper portion (+Y direction) of the electronic device 101 and a lower speaker 208b positioned in a lower portion (-Y direction) of the electronic device 101. In the disclosure, the speakers 208a and 208b are illustrated as positioned in one housing (e.g., the first housing 210 of FIG. 40, but this is an optional structure. For example, the speakers 208a and 208b may be positioned in at least one of the first housing 210 or the second housing 220. The configuration of the speakers 208a and 208b of FIG. 4 may be identical in whole or part to the configuration of the sound output module 155 of FIG. 1.

According to an embodiment, the electronic device 101 may include a rear member 270 (or rear case). According to an embodiment, the rear member 270 may be disposed in the housing 201 (e.g., the second housing 220). According to an embodiment, the rear member 270 may accommodate at least one antenna 275.

According to an embodiment, the electronic device 101 may include an antenna 275. The antennas 275a and 275b may include, e.g., an ultra-wide band (UWB) antenna 275a, a near-field communication (NFC) antenna, a wireless charging antenna, and/or a magnetic secure transmission (MST) antenna 275b. The antenna 275 may perform short-range communication with, e.g., an external device or may wirelessly transmit or receive power necessary for charging.

According to an embodiment, an antenna structure may be formed by a portion of the housing 201 or a combination thereof. For example, the antenna 275 may include a communication antenna 275c at least a portion of which is exposed to the outside and which forms at least a portion of the exterior of the electronic device 101. The communication antenna 275c may be used for communication (e.g., Wi-Fi) with an external electronic device. The communication antenna 275c may be connected to the upper portion 271a or the lower portion 271b of the rear member 270.

In the following detailed description, a configuration in which a pair of housings (or referred to as a 'housing') are coupled to be rotatable by a hinge structure is described as an example. However, it should be noted that the electronic device according to various embodiments of the disclosure is not limited thereto. For example, according to various embodiments, the electronic device may include three or more housings. In the embodiment disclosed below, a "pair of housings" may mean two rotatably-coupled housings among three or more housings.

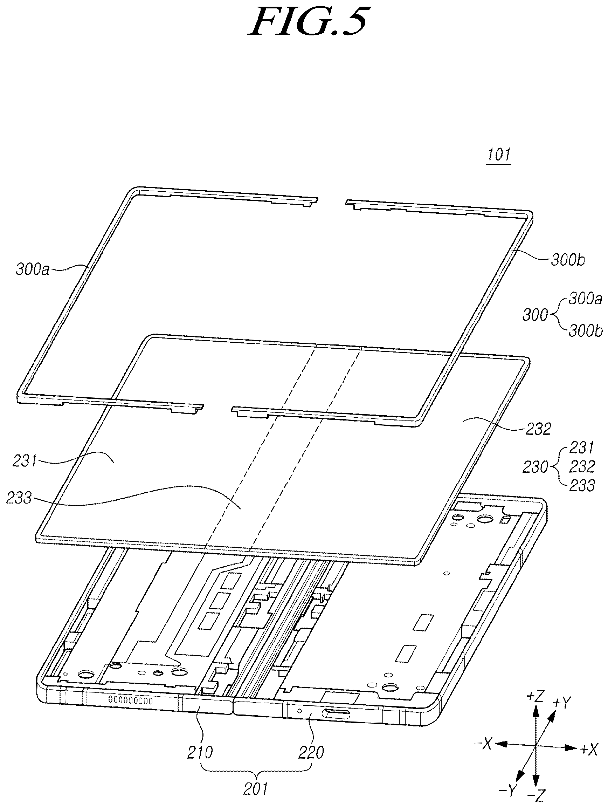

FIG. 5 is an exploded perspective view illustrating a housing, a flexible display, and a protective member of an electronic device according to an embodiment of the disclosure.

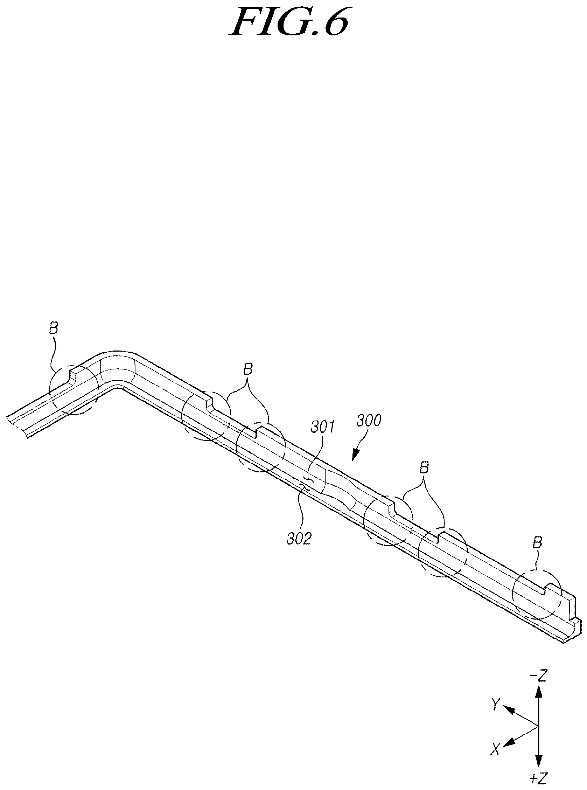

FIG. 6 is a perspective view illustrating a portion of a protective member of an electronic device according to an embodiment of the disclosure.

The configuration of the electronic device 101 of FIGS. 5 and 6 may be identical in whole or part to the configuration of the electronic device 101 of FIGS. 1 to 4. The protective member 300 of FIG. 6 is a portion of the protective member 300 of FIG. 5, and is illustrated to face an opposite direction to the protective member 300 of FIG. 5.

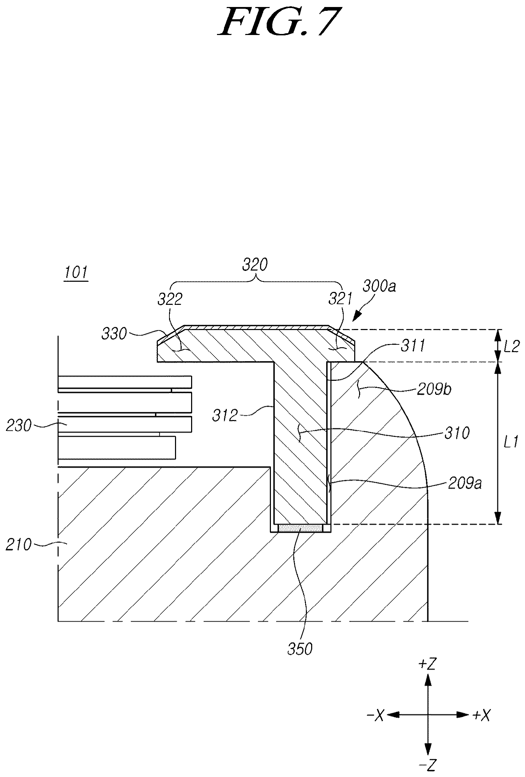

The embodiments of FIGS. 5 and 6 may be selectively combined with the embodiments of FIGS. 1 to 4 and the embodiments of FIGS. 7 to 16.

Referring to FIGS. 5 and 6, the electronic device 101 may include a housing 201, a display 230, and a protective member 300 that protects the edge of the display 230.

According to an embodiment, the housing 201 may form the overall outer appearance of the electronic device 101. The housing 201 may include a first housing 210 and a second housing 220.

According to an embodiment, the housing 201 may be referred to as a housing component considering that it is manufactured in a component unit. For example, the first housing 210 may be referred to as a first housing component and the second housing 220 may be referred to as a second housing component.

According to an embodiment, the display 230 may include a first display area 231, a second display area 232, and a folding area 233. The display 230 may be disposed across the first housing 210 and the second housing 220. For example, the first display area 231 and a portion (e.g., a portion adjacent to the first display area 231) of the folding area 233 of the display 230 may be disposed on the first housing 210, and at least a portion thereof may be supported by the first housing 210. For example, the second display area 232 and a portion (e.g., a portion adjacent to the second display area 232) of the folding area 233 of the display 230 may be disposed on the second housing 220, and at least a portion thereof may be supported by the second housing 220.

According to an embodiment, the protective member 300 may be disposed along the edge portion of the display 230 to protect the edge portion of the display 230. The protective member 300 may be formed in a single closed loop shape or may be formed in a plurality of pieces separately disposed on the first and second housings 210 and 220.

According to an embodiment, the protective member 300 may cover the edge of the display 230. For example, the first protective member 300a may be disposed on the first housing 210 to cover a first edge portion of the display 230 (e.g., the edge portion of the display 230 disposed along the first housing 210 side). For example, the second protective member 300b may be disposed on the second housing 220 to cover the second edge portion of the display 230 (e.g., the edge portion of the display 230 disposed along the second housing 220 side.

According to an embodiment, the protective member 300 may include a first protective member 300a disposed over the first housing 210 and a second protective member 300b disposed over the second housing 220. For example, the first protective member 300a may be disposed along the edge of the first housing 210, and the second protective member 300b may be disposed along the edge of the second housing 220.

According to an embodiment, the first protective member 300a may be disposed along the edges of the first display area 231 and a portion of the folding area 233 (e.g., a portion adjacent to the first display area 231) to protect one side of the display 230 that may be vulnerable to damage caused by impact. For example, the first protective member 300a may be disposed along a left side wall (e.g., a side wall in the -X-axis direction) and an upper and lower side walls of the first housing 210. According to an embodiment, the second protective member 300b may be disposed along the edges of the second display area 232 of the display 230 and a portion of the folding area 233 (e.g., a portion adjacent to the second display area 232) to protect one side of the display 230 that may be vulnerable to damage caused by impact. For example, the second protective member 300b may be disposed along the right-side wall (e.g., the side wall in the +X-axis direction) and the upper and lower side walls of the second housing 220.

According to an embodiment, the protective member 300 may be referred to as at least one of a deco, a decorative member, an edge member, a shield member, a cover member, an exterior member, or a guide member, and the term 'member' may be replaced with at least one of an element, a part, a portion, or a component.

According to an embodiment, in the unfolded state of the electronic device 101, the first protective member 300a and the second protective member 300b may be spaced apart and disposed in parallel. The first protective member 300a may be positioned along an upper side (e.g., +Y-axis direction), a lower side (e.g., -Y-axis direction), and a left side (e.g., -X-axis direction) of the edge of the display 230, and may have an open side toward the second protective member 300b. For example, when viewed from the front of the display 230, the first protective member 300a may have a shape of '['. The second protective member 300b may be positioned along an upper side (e.g., +Y-axis direction), a lower side (e.g., -Y-axis direction), and a right side (e.g., +X-axis direction) of the edge of the display 230, and may have an open side toward the first protective member 300a. For example, when viewed from the front of the display 230, the second protective member 300b may have a shape ']'. The separation distance between the first protective member 300a and the second protective member 300b may be designed to facilitate bending of the folding area 233 of the display 230. For example, in the folded state of the electronic device 101, the first protective member 300a and the second protective member 300b may be spaced apart as much as the area where the display 230 is bent. However, the shape of the first protective member 300a and/or the second protective member 300b is not limited to the shapes disclosed in FIGS. 5 and 6, but may be variously designed to correspond to the shapes of the housing 201 and the display 230. For example, the protective member 300 may be formed to cover the overall edge of the display 230 in a single closed loop shape and may include a flexible material that may be easily bent in the folded state of the electronic device 101.

According to an embodiment, in the folded state of the electronic device 101, the first protective member 300a and the second protective member 300b are disposed to face each other and may at least partially contact each other. For example, in the folded state of the electronic device 101, the first protective member 300a and the second protective member 300b may be in a state in which they entirely overlap each other. For example, in the folded state of the electronic device 101, only portions, opposite to the hinge, of the first protective member 300a and the second protective member 300b may contact each other, and they may be disposed so that the separation distance increases as they approach the hinge.

According to an embodiment, the protective member 300 (e.g., the first protective member 300a and/or the second protective member 300b) may include a first portion 301 inserted into the housing 201, and a second portion 302 formed to extend outward from the first portion 301 (e.g., the front direction (+Z axis direction)) and substantially cover the edge of the front surface of the display 230. A portion of the first portion 301 may be formed to surround the side surface of the display 230, and a portion of the second portion 302 may be formed to surround the edge of the front surface of the display 230. The second portion 302 of the protective member 300 is shaped to protrude in the +Z-axis direction further than the front surface of the display 230, and in the folded state of the electronic device 101, prevent contact between the first display area 231 and the second display area 232 of the display 230. For example, in the folded state of the electronic device 101, the first display area 231 and the second display area 232 may remain spaced apart due to contact between the first protective member 300a and the second protective member 300b.

According to an embodiment, the first protective member 300a and the second protective member 300b may be exposed to the front side of the electronic device 101 to form an outermost layer. Accordingly, when the electronic device 101 is operated from the folded state to the unfolded state, impact (e.g., friction) may occur due to contact between the first protective member 300a and the second protective member 300b. Accordingly, an enhanced protective member 300 is described below in detail so as to limit (e.g., reduce or prevent) damage to the outer surface of the first protective member 300a and/or the second protective member 300b and frictional noise (e.g., squeaky noise) by the impact.

FIG. 7 is a cross-sectional view of the electronic device, taken along A-A' of FIG. 2 according to an embodiment of the disclosure.

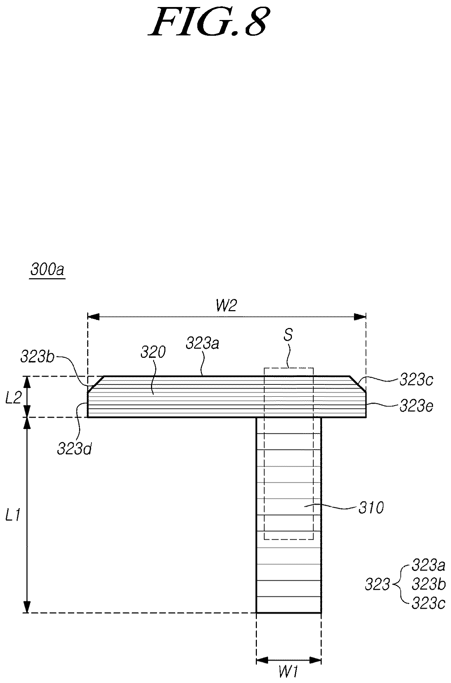

FIG. 8 is an enlarged view illustrating the example protective member of FIG. 7 according to one or more embodiment(s).

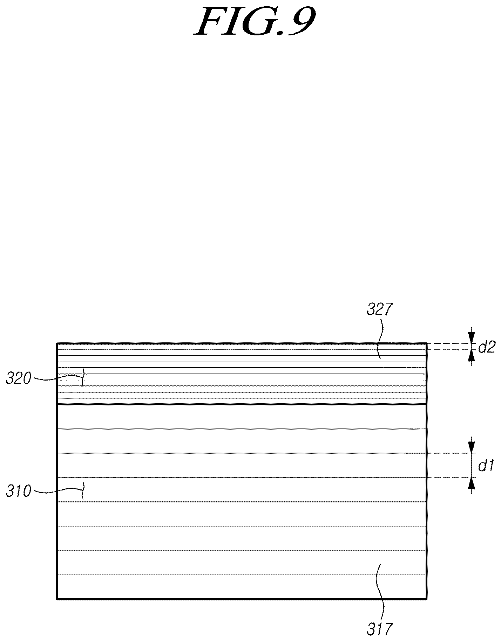

FIG. 9 is an enlarged view illustrating a partial area S of the protective member of FIG. 8, showing laminated layers forming a protective member according to an embodiment of the disclosure.

The configuration of the electronic device 101 of FIGS. 7 to 9 may be identical in whole or part to the configuration of the electronic device 101 of FIGS. 1 to 4.

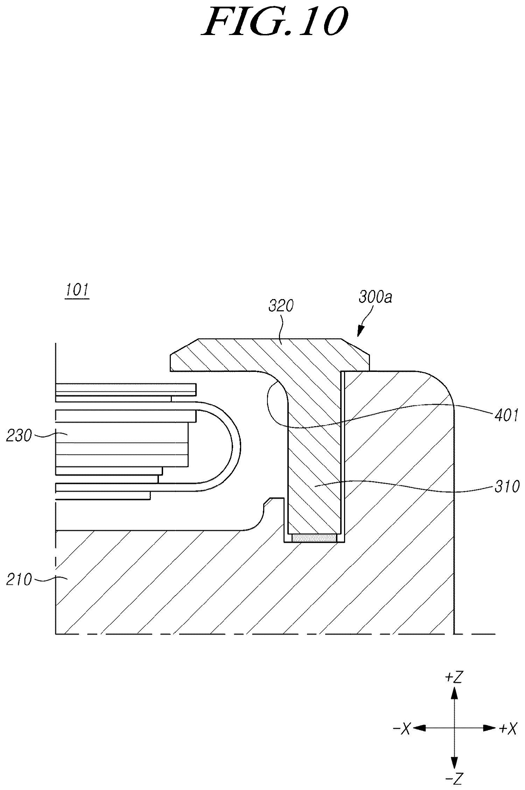

The embodiments of FIGS. 7 to 9 may be selectively combined with the embodiments of FIGS. 1 to 6 and the embodiments of FIGS. 10 to 16.

Referring to FIGS. 7 to 9, an electronic device (e.g., the electronic device 101 of FIGS. 1 to 5) may include a housing 201, a hinge (e.g., the hinge 202 of FIG. 4), a display 230, and a protective member 300 that protects the edge of the display 230.

According to an embodiment, the housing 201 may form the overall outer appearance of the electronic device 101. The housing 201 may include a first housing (e.g., the first housing 210 of FIG. 5) and a second housing (e.g., the second housing 220 of FIG. 5), and the hinge may rotatably connect the second housing 220 to the first housing 210.

According to an embodiment, the display 230 includes a flexible display and may be easily bent in response to the operation of the electronic device 101 from the unfolded state to the folded state.

According to an embodiment, the protective member 300 may include a first protective member (e.g., the first protective member 300a of FIG. 5) corresponding to the first housing 210 and a second protective member (e.g., the second protective member 300b of FIG. 5) corresponding to the second housing 220. According to an embodiment, each of the first protective member 300a and/or the second protective member 300b may include at least one of a first portion (e.g., the first portion 301 of FIG. 6), a second portion (e.g., the second portion 302 of FIG. 6), or a coating layer 330. The first portion 301 may include a first fiber-reinforced portion 310. The second portion 302 may include a second fiber-reinforced portfolio 320. The first fiber-reinforced portion of the second protective member 300b may also be called the third fiber-reinforced portion. The second fiber-reinforced portion of the second protective member 300b may also be called the fourth fiber-reinforced portion. The coating layer 330 of the first protective member 300a may also be called the first coating layer 330 and the coating layer 330 of the second protective member 300b may also be called the second coating layer.

Hereinafter, the first protective member 300a disposed on the first housing 210 and the related configuration are described, and the description may apply to the second protective member 300b and the related configuration.

Referring to FIG. 7, the first protective member 300a may be disposed along the edge of the first housing 210 to surround the edge of the display 230 (e.g., the front surface of the edge (e.g., the surface facing the +Z axis direction) and/or the side surface (e.g., the surface facing the +X axis or the -X axis direction). Hereinafter, one side facing the +Z axis is defined as at least one of a front surface, a front side, or a front end, and the other side facing the -Z axis is defined as at least one of a rear surface, a rear side, or a rear end.

According to an embodiment, the first protective member 300a may include a first fiber-reinforced portion 310, a second fiber-reinforced portion 320, and a coating layer 330. The first fiber-reinforced portion 310 may be positioned inside the first housing 210 and have a shape in which fibers (e.g., the first fiber layer 317 or the first fiber sheet) having a first thickness d1 are laminated. The second fiber-reinforced portion 320 may extend from one end of the first fiber-reinforced portion 310, form the outer appearance of the first housing 210, and have a shape in which fibers (e.g., the second fiber layer 327 or the second fiber sheet) having a second thickness d2 smaller than the first thickness d1 are laminated. The coating layer 330 may be disposed to surround the second fiber-reinforced portion 320 to protect the first protective member 300a and provide an aesthetic feeling. The first fiber layers of the third fiber-reinforced portion may also be called the third fiber layers. The second fiber layers of the fourth reinforced portion may also be called the fourth fiber layers.

According to an embodiment, the first thickness d1 and/or the second thickness d2 is/are defined with respect to the cross-sectional view of FIG. 9, and may be referred to by various expressions such as diameter, height, or length of the fiber depending on the direction in which the fibers (e.g., fiber sheets) forming the first fiber-reinforced portion 310 and/or the second fiber-reinforced portion 320 are viewed.

According to an embodiment, the first fiber-reinforced portion 310 of the first protective member 300a may have a first length L1, and a rear area (e.g., a rear end facing the -Z axis direction, or adjacent to the rear end) may be inserted into the recess 290a of the first housing 210 to couple the first protective member 300a to the first housing 210. For example, the rear area of the first fiber-reinforced portion 310 may be fitted into the recess 290a of the first housing 210, and the rear end of the first fiber-reinforced portion 310 may be fixed to the first housing 210 through an adhesive member 350. The adhesive member 350 may be formed of various materials, such as a tape or bonding, for fixing or attaching the first protective member 300a to the first housing 210. A front end of the first fiber-reinforced portion 310 may be connected to the second fiber-reinforced portion 320.

According to an embodiment, the outer side 311 (e.g., the surface facing the outside of the electronic device 101) of the first fiber-reinforced portion 310 may be formed to be surrounded by the side wall 209b forming the edge of the first housing 210. The inner side 312 (e.g., the surface facing the inside of the electronic device 101) of the first fiber-reinforced portion 310 may be disposed to face the side surface of the display 230. The inner side 312 of the first fiber-reinforced portion 310 may be disposed to be spaced apart from the side surface of the display 230, and by being disposed to cover the entire side surface of the display 230, may protect the display 230.

According to an embodiment, the second fiber-reinforced portion 320 of the first protective member 300a has a second length L2 shorter (or less) than the first length L1, and a rear end is connected to the first fiber-reinforced portion 310, and it may include an outer area 321 facing an outer side (e.g., the X-axis direction) of the electronic device 101 and an inner area 322 facing the display 230. The outer area 321 of the second fiber-reinforced portion 320 may be disposed on the side wall 209b of the first housing 210. A portion of the inner area 322 of the second fiber-reinforced portion 320 may extend toward the display 230, and a portion thereof may be disposed to face the front surface of the display 230. The inner area 322 of the second fiber-reinforced portion 320 may be disposed to be spaced apart from the front surface of the display 230, and by being disposed to surround the entire edge of the front surface of the display 230, may protect the display 230. Toward the display 230, a portion of the second fiber-reinforced portion 320 (e.g., the inner area 322) may be disposed to overlap a portion of the front surface of the display 230.

According to an embodiment, the second fiber-reinforced portion 320 may be substantially perpendicular to the first fiber-reinforced portion 310. For example, the first fiber-reinforced portion 310 may be a portion formed with a longer length in the thickness direction (e.g., the Z-axis direction) of the electronic device 101, and the second fiber-reinforced portion 320 may be a portion formed with a longer length in the length (e.g., the Y-axis direction) or width direction (e.g., the X-axis direction) of the electronic device 101.

According to an embodiment, the first length L1 and/or the second length L2 is defined with respect to the cross-sectional views of FIGS. 7 and 8, and may be referred to by various expressions such as thickness, height, or width as well as the length, depending on the direction in which the first fiber-reinforced portion 310 and/or the second fiber-reinforced portion 320 is viewed.

Referring to FIGS. 8 and 9, the first protective member 300a may include a first fiber-reinforced portion 310 having a first length L1 and a second fiber-reinforced portion 320 having a second length L2. The first length L1 of the first fiber-reinforced portion 310 may be longer than the second length L2 of the second fiber-reinforced portion 320. The first length L1 and the second length L2 may be defined as lengths in the thickness direction (e.g., the +Z-axis/-Z-axis direction) of the electronic device 101. For example, the first length L1 may be about two (2) to five (5) times longer than the second length L2. For example, the first length L1 may be about 1.0 mm to 2.0 mm. For example, the first length L1 may be about 1.2 mm to 1.5 mm. For example, the second length L2 may be about 0.1 mm to 1.0 mm. For example, the second length L2 may be about 0.3 mm to 0.6 mm.

According to an embodiment, the fiber-reinforced portion (e.g., the first fiber-reinforced portion 310 and/or the second fiber-reinforced portion 320) may be formed by laminating a plurality of fibers. The first fiber-reinforced portion 310 may be formed by laminating fibers having a first thickness d1. The second fiber-reinforced portion 320 may be formed by laminating fibers having a second thickness d2.

According to an embodiment, the first protective member 300a (e.g., the first fiber-reinforced portion 310 and/or the second fiber-reinforced portion 320) may include at least one of a glass fiber-reinforced polymer (GFRP), a carbon fiber-reinforced polymer (CFRP), an aramid fiber-reinforced polymer (AFRP), a basalt fiber-reinforced polymer (BFRP), a natural fiber-reinforced polymer (NFRP), or hybrid composites. According to an embodiment, the first protective member 300a may include at least one of polyethylene terephthalate (PET) or polybutylene terephthalate (PBT).

According to an embodiment, the first fiber-reinforced portion 310 and the second fiber-reinforced portion 320 of the first protective member 300a may be formed of the same material. For example, the first fiber-reinforced portion 310 and the second fiber-reinforced portion 320 may be a GFRP.

According to an embodiment, the first portion 301 and the second portion 302 of the first protective member 300a may be formed of different materials. For example, the first portion 301 may be one of the fiber-reinforced portions (e.g., a GFRP), and the second portion 302 may be PET.

According to an embodiment, a process for manufacturing a fiber sheet formed of a GFRP may include a process in which GFRP fiber lines wound around a plurality of fiber frames are discharged, a process in which the discharged fiber lines are stacked or bundled (e.g., GFRP after woven) and are put in an impregnation container (e.g., an epoxy impregnation container) and is impregnated with epoxy, and a process in which after the impregnation, they are formed into a single fiber sheet (e.g., GFRP after impregnation).

According to an embodiment, the fiber-reinforced portion (e.g., the first fiber-reinforced portion 310 and/or the second fiber-reinforced portion 320) may be manufactured by stacking a plurality of fiber sheets (e.g., GFRP after impregnation). For example, the fiber-reinforced portion laminating process may stack the fiber sheets (e.g., GFRPs after impregnation) formed of GPRPs and apply heat thereto, forming a single laminated fiber-reinforced portion with the impregnated epoxy used for inter-layer attaching. Hereinafter, the processes for the first fiber-reinforced portion 310 and the second fiber-reinforced portion 320 are described in detail.

According to an embodiment, the first fiber-reinforced portion 310 may be formed by laminating the first fiber layers 317 having the first thickness d1. Each of the first fiber layers 317 may be a GFRP after impregnation. For example, the first thickness d1 of each of the first fiber layers 317 may be about 0.07 mm to 0.13 mm. For example, the first thickness d1 of each of the first fiber layers 317 may be 0.08 mm to 0.12 mm. For example, the first thickness d1 of each of the first fiber layers 317 may be 0.09 mm to 0.11 mm. For example, the first thickness d1 of each of the first fiber layers 317 may be about 0.1 mm. For example, when the first length L1 of the first fiber-reinforced portion 310 is about 1.2 mm, the first fiber-reinforced portion 310 may have a structure in which 12 first fiber layers 317 having a thickness of 0.1 mm are laminated.

According to an embodiment, one first fiber sheet before being laminated may have a thickness of about 0.11 mm. For example, the thickness of the GFRP sheet may be about 0.1 mm, and the thickness of the impregnated epoxy may be about 0.01 mm. At least a portion of the impregnated epoxy may be coated to overall surround the outer surface of the GFRP sheet. According to an embodiment, in the lamination process of the first fiber-reinforced portion 310, the first fiber sheets may be stacked and heat may be applied thereto, forming one laminated first fiber-reinforced portion 310. The impregnated epoxy is used for inter-layer attaching and may be excluded from the overall lamination thickness.

According to an embodiment, the second fiber-reinforced portion 320 may be formed by laminating the second fiber layers 327 having the second thickness d2. Each of the second fiber layers 327 may be a "GFRP after impregnation." For example, the second thickness d2 of each of the second fiber layers 327 may be about 0.01 mm to 0.05 mm. For example, the second thickness d2 of each of the second fiber layers 327 may be 0.02 mm to 0.04 mm. For example, the second thickness d2 of each of the second fiber layers may be about 0.03 mm. For example, when the second length L2 of the second fiber-reinforced portion 320 is about 0.3 mm, the second fiber-reinforced portion 320 may have a structure in which 10 second fiber layers 327 having a thickness of 0.03 mm are laminated.

According to an embodiment, one second fiber sheet before being laminated may have a thickness of about 0.04 mm. For example, the thickness of the GFRP sheet may be about 0.03 mm, and the thickness of the impregnated epoxy may be about 0.01 mm. At least a portion of the impregnated epoxy may be coated to overall surround the outer surface of the GFRP sheet. According to an embodiment, in the lamination process of the second fiber-reinforced portion 320, the second fiber sheets may be stacked and heat may be applied thereto, forming one laminated second fiber-reinforced portion 320. The impregnated epoxy is used for inter-layer attaching and may be excluded from the overall lamination thickness.

According to an embodiment, the first fiber-reinforced portion 310 in which the first fiber layers 317 having the first thickness d1 are laminated may provide a structure with relatively greater rigidity than the second fiber-reinforced portion 320 in which the second fiber layers 327 having the second thickness d2 smaller than the first thickness d1 are laminated. Accordingly, the first fiber-reinforced portion 310 may support the protective member 300 as a whole in a state of being inserted into the housing 201.

According to an embodiment, the second fiber-reinforced portion 320 in which the second fiber layers 327 having the second thickness d2 are laminated may provide a relatively softer surface than the first fiber-reinforced portion 310 in which the first fiber layers 317 having the first thickness d1 longer than the second thickness d2 are laminated. Accordingly, the second fiber-reinforced portion 320 forms the exterior of the housing 201 and may provide a soft surface that directly contacts the user's skin. The second fiber-reinforced portion (e.g., the second fiber-reinforced portions forming the first protective member 300a and the second protective member 300b, respectively, may limit or reduce the strong impact and/or noise generated during contact when the electronic device 101 operates from the unfolded state to the folded state.

According to an embodiment, the protective member 300 may have a monolithic structure. The first fiber-reinforced portion 310 and the second fiber-reinforced portion 320 may form a monolithic structure. The first fiber-reinforced portion 310 and the second fiber-reinforced portion 320 may have a laminated form formed of the same material (e.g., a GFRP).

According to an embodiment, the first fiber-reinforced portion 310 and the second fiber-reinforced portion 320 may be formed as a monolithic support body or a single piece (or one body). A portion (e.g., the second fiber-reinforced portion 320) of the monolithic support body may have a structure that is exposed to the outside of the first housing 210 and seamlessly extends from the first fiber-reinforced portion 310 to the second fiber-reinforced portion 320.

According to an embodiment, when the first fiber-reinforced portion 310 and the second fiber-reinforced portion 320 are manufactured including a GFRP, a structure with relatively excellent specific strength and enhanced strength compared to a polycarbonate (PC), used as a general protective member, may be provided.

**[Table 1]**

| | PC | GFRP | Remarks |
|---|---|---|---|
| Specific strength | 76 | 623 | (Mpa/g.cm²) |
| Strength | 90.44 | 1121.4 | Mpa |

Referring to Table 1, compared to the PC, it may be identified that the specific strength of GFRP is about 8 times or more and the strength is about 12 times or more.

According to an embodiment, the first protective member 300a may include a first fiber-reinforced portion 310 having a first width w1 and a second fiber-reinforced portion 320 having a second width w2. The first width w1 of the first fiber-reinforced portion 310 may be shorter (or less) than the second width w2 of the second fiber-reinforced portion 320. The first width w1 and the second width w2 may be defined as lengths shorter (or less) among lengths in the width direction (e.g., the X-axis/Y-axis direction) of the electronic device 101. The second fiber-reinforced portion 320 may be substantially perpendicular to the first fiber-reinforced portion 310. For example, the second width w2 may have a length that is about two to four times longer (or wider) than the first width w1. For example, the first width w1 may have a size that may be inserted into the recess 290a of the housing 201. For example, the second fiber-reinforced portion 320 having a second width w2 may extend outward and inward of the electronic device 101 further than the first fiber-reinforced portion 310 having the first width w1, and the portion extending outward (e.g., the outer area 321) thereof may be disposed to surround a portion of the housing 201. The second fiber-reinforced portion 320 (e.g., the inner area 322) extending inward may be disposed to surround a portion of the display 230.

According to an embodiment, the coating layer 330 of the first protective member 300a may be formed to surround a front surface (e.g., a surface facing the +Z-axis direction) and/or a side surface (e.g., a surface facing the X-axis/Y-axis direction) of the second fiber-reinforced portion 320. For example, the coating layer 330 may be disposed along the front surface of the second fiber-reinforced portion 320, and a side surface thereof may be excluded. For example, the coating layer 330 may be disposed along a flat surface of the front surface of the second fiber-reinforced portion 320, and an inclined surface may be excluded. For example, the coating layer 330 may have layers with different glosses disposed along the flat surface and the inclined surface of the front surface of the second fiber-reinforced portion 320.

According to an embodiment, the second fiber-reinforced portion 320 may include a front surface 323 facing a front direction (e.g., the +Z axis direction) of the electronic device 101, and the front surface 323 may include a flat surface 323a parallel to the display 230, and surfaces 323b and 323c inclined toward the display 230 or the housing 201 from the flat surface 323a.

According to an embodiment, when the coating layer 330 is disposed on the front surface 323 of the second fiber-reinforced portion 320, the front surface of the coating layer 330 may be exposed to the outside of the electronic device 101. The coating layer 330 may include a flat surface and an inclined surface as it has a thin thickness formed to correspond to the shape of the front surface 323 of the second fiber-reinforced portion 320. According to an embodiment, when the coating layer 330 is excluded, the front surface 323 of the second fiber-reinforced portion 320 may be directly exposed to the outside of the electronic device 101.

According to an embodiment, the inclined surface 323b of the second fiber-reinforced portion 320 may be formed by cutting the edge of the fiber laminated layers stacked in a rectangular shape, or by cutting the edge after the coating layer 330 is disposed on the fiber laminated layers.

According to an embodiment, of the front surface 323 of the second fiber-reinforced portion 320, the inclined surface 323b may be formed at the edge of the outer area 321 and/or the inner area 322 of the electronic device 101. For example, the front surface 323 may include a flat surface 323a and a first inclined surface 323b inclined toward the display 230. For example, the front surface 323 may include a flat surface 323a, a first inclined surface 323b inclined toward the display 230, and a second inclined surface 323c inclined toward the side wall 209b of the housing 201. The second inclined surface 323c and the side wall 209b of the housing 201 may seamlessly extend.

According to an embodiment, at least a portion of the coating layer 330 (or the second fiber-reinforced portion 320) disposed along the edge of the display 230 and exposed to the outside may form a high-gloss surface corresponding to the display 230. For example, the high-gloss surface of the protective member 300 visually reduces the boundary between the display 230 and the surrounding frame (e.g., the protective member 300), allowing the display 230 to be seen wider to the user when the display is off. Further, the high-gloss surface may make the display screen look brighter and clearer with the surrounding reflection effect while the display is on and may provide a unified design as a whole. Further, the high-gloss surface may make the electronic device feel luxurious and modern and may provide a user experience such as a nice tactile sensation.

According to an embodiment, the glossy and matte may be compared by at least one value among glossiness or gloss level, reflectance, and haze. For example, if the gloss level is about 70 GU or more, it may be understood as glossy, if about 10 to 70 GU, ass semi-matt, and if about 10 GU or less, as matte. For example, when the reflectance (e.g., when using a spectrophotometer and/or a reflectance meter) is about 70% or more, it may be understood as matte with high reflectance, and when about 30% or less, it may be understood as matte with low reflectance. For example, when the haze is about 5% or less, it may be understood as glossy with a low haze value, and if about 10% or more, it may be understood as matte with a high haze value.

According to an embodiment, of the front surface of the coating layer 330 (or the second fiber-reinforced portion 320), the flat surface may form a high-gloss surface, and the inclined surface (e.g., corresponding to the first inclined surface 323b) facing the display 230 may form a matte surface. As the flat surface facing the front surface parallel to the display 230 (e.g., the +Z-axis direction) and the inclined surface differ in gloss level, the flat surface forming the high-gloss surface may be visually more prominent (e.g., more visible).

According to an embodiment, of the front surface of the coating layer 330 (or the second fiber-reinforced portion 320), the flat surface may form a high-gloss surface, and the inclined surface (e.g., corresponding to the first inclined surface 323b) facing the display 230 and the inclined surface (e.g., corresponding to the second inclined surface 323c) facing the side wall 209b of the housing 201 may form a matte surface. Of the front surface of the coating layer 330 (or the second fiber-reinforced portion 320), the side surface (e.g., corresponding to the first side surface 323d) facing the display 230 and the side surface (e.g., corresponding to the second side surface 323e) facing the outside of the housing 201 may form a matte surface. The flat surface facing the front surface (e.g., the +Z-axis direction) parallel to the display 230 differs in gloss level from the inclined surface (or side surface), so that the flat surface forming the high-gloss surface may be visually more prominent (e.g., more visible).

According to an embodiment, the inclined surface structure and the arrangement of the high-gloss layer/matte layer of the second fiber-reinforced portion 320 may provide an aesthetic feeling to the first protective member 300a. For example, when the inclined surface and/or the side surface of the second fiber-reinforced portion 320 is formed as a high-gloss surface (when a glossy coating layer is disposed), the fibers constituting the laminated fiber layers may be visually recognized from the outside, but when it is formed as a matte surface (when a matte coating layer is disposed), they may not be visually recognized from the outside. Accordingly, when viewed by the user, the first protective member 300a may provide a visually excellent surface quality enhancement effect.

FIG. 10 is a cross-sectional view illustrating a portion of a protective member in which an inner portion thereof is bent according to an embodiment of the disclosure.

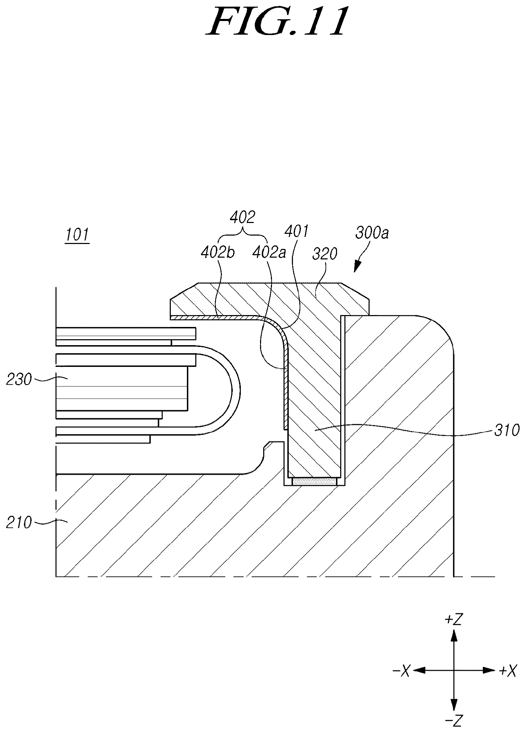

FIG. 11 is a cross-sectional view illustrating a portion of a protective member with a blocking layer is disposed according to an embodiment of the disclosure.

The configuration of the electronic device 101 of FIGS. 10 and 11 may be identical in whole or part to the configuration of the electronic device 101 of FIGS. 1 to 9. The configuration of the protective member 300 of FIGS. 5 to 9 may be applied to the configuration of the protective member 300 of FIGS. 10 and 11 which may be an embodiment of the electronic device of FIG. 2 cut along A-A'. Hereinafter, in the description of FIG. 10, the bending shape related to B of FIG. 6 is also disclosed.

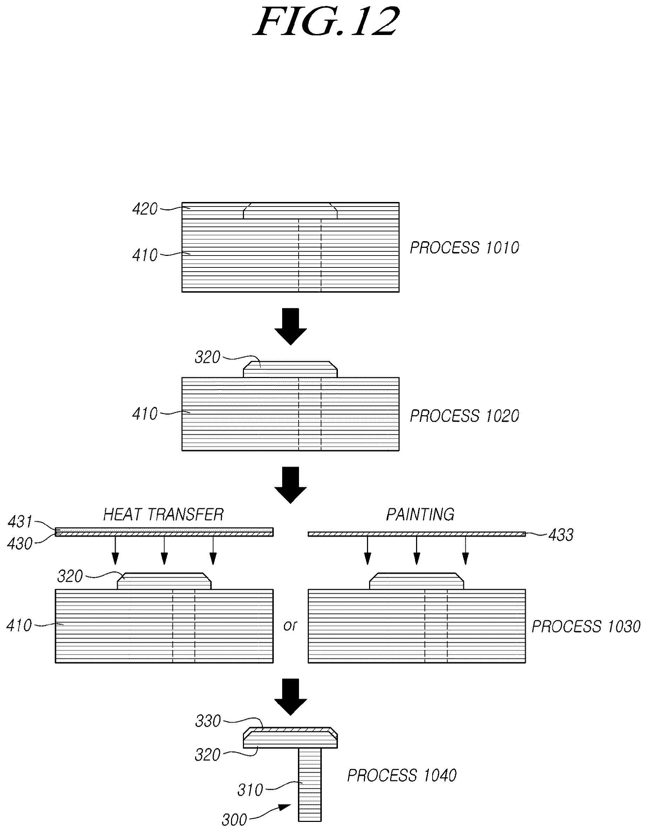

The embodiments of FIGS. 10 and 11 may be selectively combined with the embodiments of FIGS. 1 to 9 and the embodiments of FIGS. 12 to 16.

Referring to FIGS. 10 and 11, an electronic device 101 may include a housing 201 (e.g., the first housing 210), a display 230, and a protective member 300 that protects the edge of the display 230.

According to an embodiment, the protective member 300 may include a first protective member 300a corresponding to the first housing 210 and a second protective member (e.g., the second protective member 300b of FIG. 5) corresponding to the second housing 220. Hereinafter, the first protective member 300a disposed on the first housing 210 and the related configuration are described, and the description may apply to the second protective member 300b and the related configuration.

According to an embodiment, the first protective member 300a may include a first fiber-reinforced portion 310 and a second fiber-reinforced portion 320. According to an embodiment, the first protective member 300a may include a first fiber-reinforced portion 310, a second fiber-reinforced portion 320, and a coating layer (e.g., the coating layer 330 of FIG. 7).

According to an embodiment, the first fiber-reinforced portion 310 is positioned inside the first housing 210 and may have a shape in which fibers having the first thickness are laminated. The second fiber-reinforced portion 320 may extend from one end of the first fiber-reinforced portion 310, form the outer appearance of the first housing 210, and have a shape in which fibers having a second thickness d2 smaller than the first thickness d1 are laminated. The coating layer 330 may be disposed to surround the first fiber-reinforced portion 310 to protect the first protective member 300a and provide an aesthetic feeling.

Referring to FIGS. 6 and 10, the first protective member 300a may include a first fiber-reinforced portion 310 extending in the length direction (e.g., the X-axis direction/Y-axis direction) along the side surface of the display 230, and a second fiber-reinforced portion 320 substantially perpendicular to the first fiber-reinforced portion 310 and extending in the lateral direction of the display 230 and the opposite direction. The first portion 301 and the second portion 302 of FIG. 6 may be understood as the first fiber-reinforced portion 310 and the second fiber-reinforced portion 320.

According to an embodiment, the second fiber-reinforced portion 320 is disposed to have substantially the same length (e.g., length in the Z-axis direction) along the edge of the display 230, and the first fiber-reinforced portion 310 may be formed to have a partially different length (e.g., length in the Z-axis direction) depending on the design of the electronic device 101. A portion (e.g., B of FIG. 6) of the first fiber-reinforced portion 310 may be separated or spaced apart according to the difference in lengths. For example, a portion (e.g., B of FIG. 6) of the first fiber-reinforced portion 310 may provide a stepped shape (e.g., shaped in a stepwise manner). The stepped shape may provide a stepped shape including a curved surface. For example, if it is formed as a right-angled corner portion in one area of the first fiber-reinforced portion 310, damage may easily occur by the natural function of the protective member with a high frequency of impacts. Accordingly, a boundary area, in which the length corresponding to a portion (e.g., B of FIG. 6) of the first fiber-reinforced portion 310 is changed, may be formed (e.g., shaped) as a curved surface rather than straight, thereby limiting (e.g., preventing or reducing) damage (e.g., cracks).

According to an embodiment, the first protective member 300a may include a first fiber-reinforced portion 310 extending in the thickness direction (e.g., the Z-axis direction) corresponding to the side surface of the display 230, and a second fiber-reinforced portion 320 substantially perpendicular to the first fiber-reinforced portion 310 and extending in the lateral direction of the display 230 and the opposite direction. As the second fiber-reinforced portion 320 extends in the X-axis direction or the Y-axis direction, a portion of the boundary surface between the first fiber-reinforced portion 310 and the second fiber-reinforced portion 320 may be shaped or formed with curvature (e.g., bent and not straight). For example, when the boundary surface between the first fiber-reinforced portion 310 and the second fiber-reinforced portion 320 is formed in a right-angled shape, damage may easily occur by the natural function of the protective member with a high frequency of impacts. Accordingly, the boundary surface area between the first fiber-reinforced portion 310 and the second fiber-reinforced portion 320 may be formed (or shaped) as a curved surface 401 rather than straight, thereby limiting (e.g., preventing or reducing) damage (e.g., cracks).

Referring to FIG. 11, the inside of the protective member 300 may be positioned to surround the front surface (e.g., one surface facing the +Z axis direction) and the side surface (e.g., one surface facing the X axis/Y axis) of the display 230 and may be spaced apart from the display 230. The electronic device 101 may include a blocking layer 402 disposed along the inside of the protective member 300 to limit (e.g., prevent or reduce) electrostatic discharge (ESD) of the display 230 sensitive to electrostatic discharge.

According to an embodiment, the blocking layer 402 may be disposed adjacent to the display 230. The blocking layer 402 may include a first blocking portion 402a disposed on one side of the first fiber-reinforced portion 310 of the protective member 300 and a second blocking portion 402b, which is substantially perpendicular to the first blocking portion 402a and extends to one side of the second fiber-reinforced portion 320. A portion of the first blocking portion 402a and/or a portion of the second blocking portion 402b corresponding to the boundary portion between the first blocking portion 402a and the second blocking portion 402b may be formed (or shaped) as a curved surface corresponding to the shape of the curved surface 401 of the protective member 300.

According to an embodiment, the blocking layer 402 may be a conductive adhesive member directly adhered (e.g., attached) to the inside of the protective member 300 injection-molded with a general resin. For example, the general resin for forming the protective member 300 may be at least one of an epoxy resin, a polyester resin, an acrylic resin, a polyurethane resin, or a polycarbonate resin.

According to an embodiment, the blocking layer 402 may be formed by activating one area inside the protective member 300 injection-molded with a laser direct structuring (LDS) resin and then plating (or deposition) the activated portion. For example, the LDS resin for forming the protective member 330 may be at least one of a polyphenylene sulfide (PPS) resin or a liquid crystal polymer (LCP) resin.

FIG. 12 is a flowchart illustrating a process of manufacturing a protective member according to an embodiment of the disclosure.

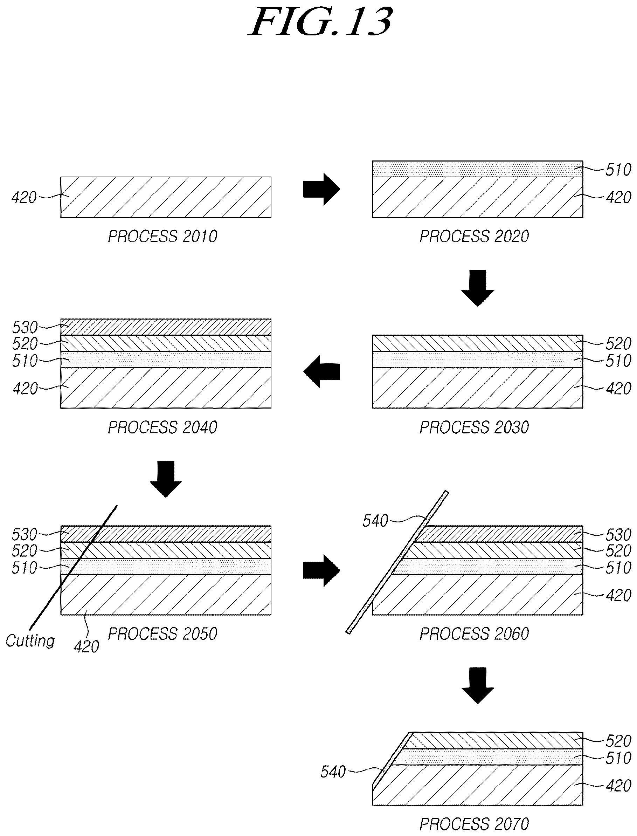

FIG. 13 is a flowchart illustrating in detail a process for a second fiber-reinforced portion of a protective member, of the flowchart of FIG. 12 according to an embodiment of the disclosure.

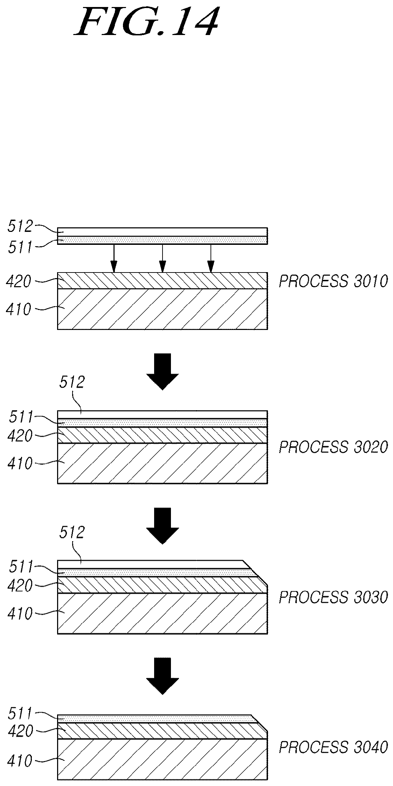

FIG. 14 is a flowchart illustrating in detail a process for a second fiber-reinforced portion of a protective member, of the flowchart of FIG. 12 according to an embodiment of the disclosure.

The configuration of the protective member 300 of FIGS. 12 to 14 may be identical in whole or part to the configuration of the protective member 300 of FIGS. 5 to 11.

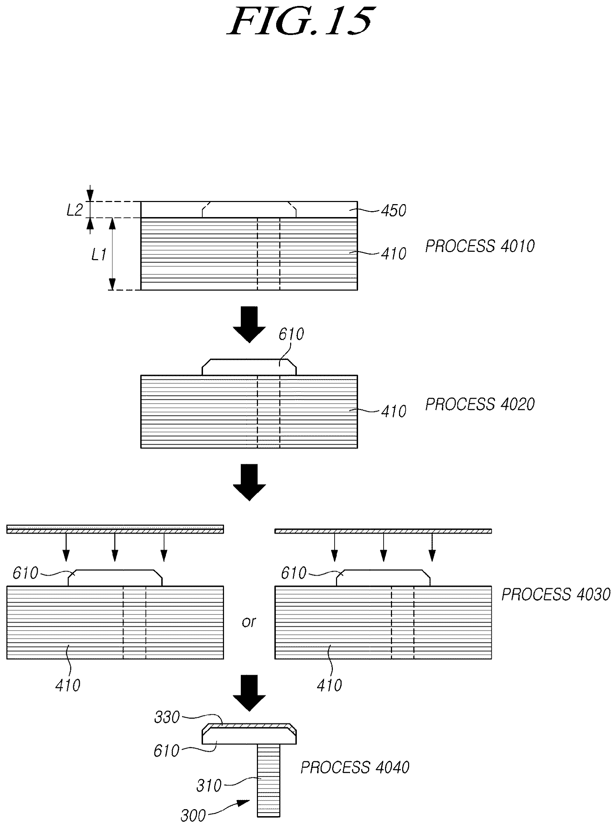

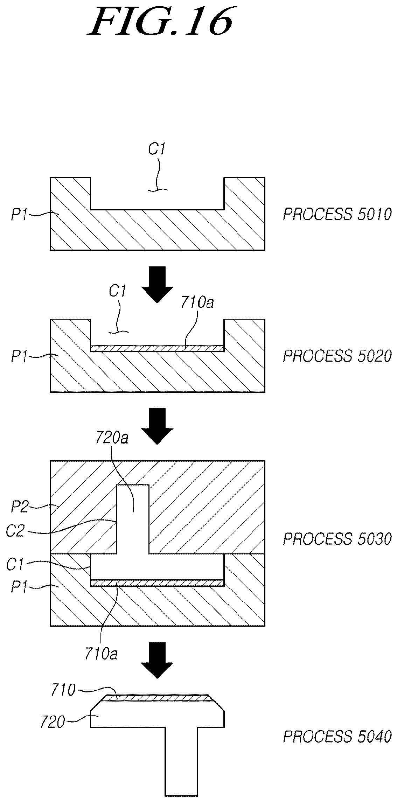

The embodiments of FIGS. 12 to 14 may be selectively combined with the embodiments of FIGS. 1 to 11 and the embodiments of FIGS. 15 and 16.

Referring to FIGS. 12 to 14, the electronic device 101 may include a housing (e.g., the housing 201 of FIG. 5), a display (e.g., the display 230 of FIG. 5), and a protective member 300 that protects the edge of the display 230.

According to an embodiment, the protective member 300 may include a first fiber-reinforced portion 310 and a second fiber-reinforced portion 320. According to an embodiment, the protective member 300 may include a first fiber-reinforced portion 310, a second fiber-reinforced portion 320 disposed on the first fiber-reinforced portion 310, and a coating layer 330 disposed on the second fiber-reinforced portion 320.

According to an embodiment, the first fiber-reinforced portion 310 is positioned inside the first housing 210 and may have a shape in which fibers having the first thickness are laminated. The second fiber-reinforced portion 320 may extend from one end of the first fiber-reinforced portion 310, form the outer appearance of the first housing 210, and have a shape in which fibers having a second thickness d2 smaller than the first thickness d1 are laminated.

According to an embodiment, in the manufacturing process of the protective member 300, a sheet- or plate-shaped material before being formed into the first fiber-reinforced portion 310 may be referred to as a first fiber-reinforced primer (or base) 410. In the process of forming the protective member 300, a sheet- or plate-shaped material before being formed into the second fiber-reinforced portion 320 may be referred to as a second fiber-reinforced primer (or base) 420.

Referring to FIG. 12, in process 1010, the first fiber-reinforced primer (or base) 410 and the second fiber-reinforced primer 420 (or base) may be prepared, and then the second fiber-reinforced primer 420 may be bonded onto the first fiber-reinforced primer 410. For example, the first fiber-reinforced primer 410 and the second fiber-reinforced primer 420 are formed of the same material, and after disposing the second fiber-reinforced primer 420 on the first fiber-reinforced primer 410, they may be bonded by a thermal lamination method.

According to an embodiment, the first fiber-reinforced primer 410 and the second fiber-reinforced primer 420 may be at least one of a GFRP, a (CFRP, an AFRP, a BFRP, or a NFRP. The first fiber-reinforced primer 410 may be manufactured by laminating the first fiber layers 317 (or the first fiber sheets) having the first thickness (e.g., the first thickness d1 of FIG. 9). The second fiber-reinforced primer 420 may be manufactured by laminating the second fiber layers 327 (or the second fiber sheets) having the second thickness (e.g., the second thickness d2 of FIG. 9). The first thickness d1 of the first fiber layer 317 may be longer than the second thickness d2 of the second fiber layer 327. For example, the first thickness d1 of the first fiber layer 317 may be about 0.1 mm. For example, the second thickness d2 of the second fiber layer 327 may be about 0.3 mm.

In process 1020, the second fiber-reinforced primer 420 may be processed (e.g., cut) into the second fiber-reinforced portion 320.

According to an embodiment, the first fiber-reinforced portion 310 is a portion that is inserted into the housing 201 to support the protective member 300 as a whole, and the second fiber-reinforced portion 320 may be a portion that forms the outer appearance of the electronic device 101 and is formed to surround the edge of the display 230. For convenience of process, the first fiber reinforcement primer 410 may be processed after the second fiber reinforcement primer 420 is processed.

When viewed from the front surface of the electronic device 101, the second fiber-reinforced primer 420 may extend along the edge of the display 230 and may be processed so that a portion thereof has a shape covering the front surface of the display 230.

As shown in FIG. 12, the plate-shaped second fiber-reinforced primer 420 may be processed into a shape extending in the X-axis direction and/or Y-axis direction considering the overall length in the electronic device 101 so that one end thereof covers the edge of the display 230, and the other end is positioned on the side wall of the housing 201 when the protective member 300 is viewed from the cross section thereof.

Thereafter, the second fiber-reinforced primer 420 may be processed into the second fiber-reinforced portion 320 including a flat surface and an inclined surface through a cutting process. The inclined surface of the second fiber-reinforced portion 320 may form an inclined surface from the flat surface toward the display 230 side and/or the side wall of the housing 201.

In process 1030, the coating layer 330 may be disposed on the front surface and/or the side surface of the second fiber-reinforced portion 320.

The coating layer 330 is disposed to surround the outer surface of the second fiber-reinforced portion 320 to provide a high-gloss surface corresponding to the display 230 and may provide durability enhancement, corrosion prevention, and waterproof/moisture-resistance effects. The coating layer 330 may be formed by at least one of painting, deposition, transfer, or lamination.

According to an embodiment, the coating layer 330 may be formed on the outer surface of the second fiber-reinforced portion 320 through a film heat transfer process. The film heat transfer process may be a heat transfer method using a film CMF (color, material, finish) technique, and may be a process of transferring an image or pattern (e.g., the coating sheet 430) to a material (e.g., the second fiber-reinforced portion 320) using heat. For example, after printing the coating sheet 430 to be transferred on the heat transfer film 431, the heat transfer film 431 may be disposed on one surface (e.g., the front surface and/or the side surface) of the second fiber-reinforced portion 320. Thereafter, the coating sheet 430 may be transferred to one surface of the second fiber-reinforced portion 320 through heat and pressure, and a process of removing the heat transfer film 431 may be performed.

According to an embodiment, the coating layer 330 may be formed on the outer surface of the second fiber-reinforced portion 320 through a painting process. First, one surface (e.g., the front surface and/or side surface) of the second fiber-reinforced portion 320 organized through cleaning or polishing may be prepared, and a desired paint 433 may be prepared, and thereafter, the coating layer 330 may be uniformly formed on one surface of the second fiber-reinforced portion 320 according to one of various painting methods (e.g., brush painting, roller painting, spray painting, or fully automated painting system).

In process 1040, the first fiber-reinforced primer 410 may be processed. The first fiber-reinforced portion 310, formed by processing the first fiber reinforcement primer 410, may be manufactured in a shape that may be fitted into a recess formed in the side wall 209b of the housing 201. Thereafter, an adhesive member may be disposed between one side of the first fiber-reinforced portion 310 and the recess so as to be strongly coupled to the recess formed in the side wall 209b of the housing 201.

Referring to FIG. 13, the protective member 300 may be manufactured to cover the edge of the display 230 and include the high-gloss surface corresponding to the display 230. The process of FIG. 13 may replace at least one of the process 1010 and/or the process 1020 of FIG. 12.

In process 2010, the second fiber-reinforced primer 420 may be prepared. Process 2010 may be a portion of process 1010 showing only the second fiber-reinforced primer 420 of process 1010.

In process 2020, a glossy coating layer 510 may be applied on the second fiber-reinforced primer 420. The glossy coating layer 510 may be formed through the heat transfer or painting process described above in process 1030.

In process 2030, a ultraviolet (UV) coating layer 520 may be applied on the glossy coating layer 510. The UV coating layer 520 may be a coating layer applied to the surface of the object using a paint cured by (UV rays. The UV coating layer 520 may be disposed on the outermost layer of the protective member 300 to prevent scratches and maintain high gloss.

In process 2040, a masking 530 may be attached onto the UV coating layer 520.

In process 2050, a cutting process may be performed in a state in which the masking 530 is attached. The cutting process may form an inclined surface with respect to the front surface of the second fiber-reinforced primer 420. The cutting process may form an inclined surface on a portion of at least one of the second fiber-reinforced primer 420, the glossy coating layer 510, or the UV coating layer 520, together with a portion of the masking. For example, in a structure where the second fiber-reinforced primer 420, the glossy coating layer 510, the UV coating layer 520, and the masking 530 are stacked from the bottom, the edge areas of the second fiber-reinforced primer 420, the glossy coating layer 510, the UV coating layer 520, and the masking 530 may be cut according to a designated slope. By the cutting process, a larger area may be removed as it is positioned on an upper side of the stacked structure. For example, the area where the UV coating layer 520 has the largest size may be removed, and the area where the second fiber-reinforced primer 420 has the smallest size may be removed.

In process 2060, a matte coating layer 540 may be coated on the cutting-processed surface (e.g., the inclined surface). The matte coating layer 540 may be formed through the heat transfer or painting process described above in process 1030.

By removing the masking 530 in process 2070, a protective member 300 may be formed in which the front surface provides a high-gloss surface and the side surface (e.g., the inclined surface) provides a matte surface. For example, of the front of the protective member 300, the flat surface may form a high-gloss surface, and the inclined surface toward the display side or the side wall 209b of the housing 201 may form a matte surface. Among the side surfaces of the protective member 300, the side surface facing the display side and the side surface facing the outside of the housing 201 may form a matte surface. Compared to the flat surface facing the front surface (e.g., the +Z-axis direction) parallel to the display 230, the inclined surface (or side surface) differs in gloss level, so that the flat surface forming the high-gloss surface may be more visible.

According to an embodiment, when the inclined surface and/or the side surface is formed as a high-gloss surface, the fibers constituting the laminated fiber layers may be visually recognized from the outside, but when formed as a matte surface, they are not visually recognized from the outside, thereby providing an effect of enhancing the surface quality when viewed by the user.

Referring to FIG. 14, the protective member 300 may be manufactured to cover the edge of the display 230 and include a thin fiber sheet layer in which the shape of the fiber is not visible from the outside. The process of FIG. 14 may replace at least one of the process 1010 and/or the process 1020 of FIG. 12.

In process 3010, a first fiber-reinforced primer 410 and a second fiber-reinforced primer 420 may be prepared, and a heat transfer film 512 bonded with the glossy coating sheet 511 disposed on the second fiber-reinforced primer 420 may be prepared. Process 3010 may be a portion of process 1010. The first fiber-reinforced primer 410 is a laminated component of the first fiber sheets, and the thickness of each of the first fiber sheets may be about 0.07mm to 0.13mm. The second fiber-reinforced primer 420 is a laminated component of the second fiber sheets, and the thickness of each of the second fiber sheets may be about 0.01mm to 0.05mm.

In process 3020, a heat transfer film 512 bonded with the glossy coating sheet 511 may be disposed on the second fiber-reinforced primer 420. Process 3020 may be performed through the above-described heat transfer process. For example, the coating sheet 511 for transfer and the heat transfer film 512 stacked thereon may be disposed on the second fiber reinforcement primer 420, and the heat transfer film 512 may be transferred on the second fiber reinforcement primer 420 through heat and pressure.

However, a design change may be made so that the process of forming the coating layer on the second fiber-reinforced primer 420 is performed by various manufacturing methods such as a painting process and heat transfer.

In process 3030, a cutting process may be performed. The cutting process may form an inclined surface with respect to the front surface of the second fiber-reinforced primer 420. Unlike process 2050 of FIG. 13, process 3030 may be performed without masking. The cutting process may cut the second fiber-reinforced primer 420 and the heat transfer film 512 bonded with the glossy coating sheet 511 disposed on the second fiber-reinforced primer 420. For example, in a structure where the second fiber-reinforced primer 420, the glossy coating sheet 511, and the heat transfer film 512 are stacked from the bottom, the edge areas of the second fiber-reinforced primer 420, glossy coating sheet 511, and heat transfer film 512 may be cut according to a designated (e.g., predetermined) slope (e.g., angle).

If the heat transfer film 512 is removed in process 3050, a protective member 300 may be formed in which the front surface provides a high-gloss surface and the side surface (e.g., the inclined surface) provides a matte surface. For example, of the front of the protective member 300, the flat surface may form a high-gloss surface, and the inclined surface toward the display side or the side wall of the housing 201 may form a matte surface. Among the side surfaces of the protective member 300, the side surface facing the display side and the side surface facing the outside of the housing 201 may form a matte surface. Compared to the flat surface facing the front surface (e.g., the +Z-axis direction) parallel to the display 230, the inclined surface (or side surface) differs in gloss level, so that the flat surface forming the high-gloss surface may be more visible. The inclined surface forming the matte surface may be an inclined surface of a structure in which the above-described second fiber sheets having the smaller thickness (e.g., about 0.01mm to 0.05mm) are stacked. Even when the inclined surface is directly exposed to the outside, the presence of the fibers is not recognized from the outside due to the thin fiber structure, and thus enhanced surface quality may be provided even without an additional coating layer.

FIG. 15 is a flowchart illustrating a process for a protective member according to an embodiment of the disclosure.

The configuration of the protective member 300 of FIG. 15 may be identical in whole or part to the configuration of the protective member 300 of FIGS. 5 to 14.

The embodiments of FIG. 15 may be selectively combined with the embodiments of FIGS. 1 to 14 and the embodiment of FIG. 16.

Referring to FIG. 15, the electronic device 101 may include a housing (e.g., the housing 201 of FIG. 5), a display (e.g., the display 230 of FIG. 5), and a protective member 300 that protects the edge of the display 230.

According to an embodiment, the protective member 300 may include a first fiber-reinforced portion 310 and an injection-molded portion 610. The first fiber-reinforced portion 310 may be disposed inside the housing 201, and the injection-molded portion 610 may extend from the first fiber-reinforced portion 310, so that a portion thereof may be disposed along the front surface of the edge of the display 230.

According to an embodiment, in the manufacturing process of the protective member 300, a sheet- or plate-shaped material before being formed into the first fiber-reinforced portion 310 may be referred to as a first fiber-reinforced primer (or base) 410. In the process of manufacturing the protective member 300, a sheet- or plate-shaped material before being formed into the injection-molded portion 610 may be referred to as an injection-molded primer (or base) 450.

In process 4010, the first fiber-reinforced primer (or base) 410 and the injection-molded primer 450 (or base) may be prepared, and then the injection-molded primer 450 may be bonded onto the first fiber-reinforced primer 410. For example, the first fiber-reinforced primer 410 and the injection-molded primer 450 are formed of different materials, and after disposing the injection-molded primer 450 on the first fiber-reinforced primer 410, they may be bonded by a thermal compression method.

According to an embodiment, the first fiber-reinforced primer 410 may be at least one of a GFRP, a CFRP, an AFRP, a BFRP, or a NFRP. The first fiber-reinforced primer 410 may be manufactured by laminating first fiber sheets having a first thickness. The first thickness may be about 0.07 mm to 0.13 mm. The first fiber-reinforced primer 410 may have a first length L1 by laminating a plurality of first fiber sheets. The first length L1 may be about 1.2 mm to 1.5 mm.

According to an embodiment, the injection primer 450 may include at least one of PET, PC, or PBT. The injection primer 450 has a second length L2 shorter (or less) than the first length L1, and may be formed through injection molding. The second length L2 may be about 0.3 mm to 0.6 mm.

In process 4020, the injection-molded primer 450 may be processed (e.g., cut) into the injection-molded portion 610.

According to an embodiment, the first fiber-reinforced portion 310 is a portion that is inserted into the housing 201 to support the protective member 300 as a whole, and the injection-molded portion 610 may be a portion that forms the outer appearance of the electronic device 101 and is formed to surround the edge of the display 230. For convenience of process, the first fiber reinforcement primer 410 may be processed after the injection-molded portion 610 is processed.

When viewed from the front surface of the electronic device 101, the injection-molded primer 450 may extend along the edge of the display 230, and may be processed so that a portion thereof has a shape covering the front surface of the display 230.

As shown in FIG. 15, the plate-shaped injection-molded primer 450 may be processed into a shape extending in the X-axis direction and/or Y-axis direction considering the overall length in the electronic device 101 so that one end thereof covers the edge of the display 230, and the other end is positioned on the side wall of the housing 201 when the protective member 300 is viewed from the cross section thereof.

Thereafter, the injection-molded primer 450 may be processed into the injection-molded portion 610 including a flat surface and an inclined surface through a cutting process. The inclined surface of the injection-molded portion 610 may form an inclined surface from the flat surface toward the display 230 side and/or the side wall of the housing 201.

In process 4030, the coating layer 330 may be disposed on the front surface and/or the side surface of the injection-molded portion 610.

The coating layer 330 is disposed to surround the outer surface of the injection-molded portion 610 to provide a high-gloss surface corresponding to the display 230 and may provide durability enhancement, corrosion prevention, and waterproof/moisture-resistance effects. The coating layer 330 may be formed by at least one of painting, deposition, transfer, or lamination.

According to an embodiment, the coating layer 330 may be formed on the outer surface of the injection-molded portion 610 through a film heat transfer process. The film heat transfer process may be a heat transfer method using a film CMF (color, material, finish) technique, and may be a process of transferring an image or pattern (e.g., the coating sheet 430) to a material (e.g., the injection-molded portion 610) using heat. For example, after printing the coating sheet 430 to be transferred on the heat transfer film 431, the heat transfer film 431 may be disposed on one surface (e.g., the front surface and/or the side surface) of the injection-molded portion 610. Thereafter, the coating sheet 430 may be transferred to one surface of the injection-molded portion 610 through heat and pressure, and a process of removing the heat transfer film 431 may be performed.

According to an embodiment, the coating layer 330 may be formed on the outer surface of the injection-molded portion 610 through a painting process. First, one surface (e.g., the front surface and/or side surface) of the injection-molded portion 610 organized through cleaning or polishing may be prepared, and a desired paint 433 may be prepared, and thereafter, the coating layer 330 may be uniformly formed on one surface of the injection-molded portion 610 according to one of various painting methods (e.g., brush painting, roller painting, spray painting, or fully automated painting system).

In process 4040, the first fiber-reinforced primer 410 may be processed. The first fiber-reinforced portion 310 formed by processing the first fiber reinforcement primer 410 may be manufactured in a shape that may be fitted into a recess formed in the side wall 209b of the housing 201. Thereafter, an adhesive member may be disposed between one side of the first fiber-reinforced portion 310 and the recess so as to be strongly coupled to the recess formed in the side wall 209b of the housing 201.

FIG. 16 is a flowchart illustrating a process for a protective member according to an embodiment of the disclosure.

The configuration of the protective member 300 of FIG. 16 may be identical in whole or part to the configuration of the protective member 300 of FIGS. 5 to 11.

The embodiments of FIG. 16 may be selectively combined with the embodiments of FIGS. 1 to 14.

Referring to FIG. 16, the electronic device 101 may include a housing (e.g., the housing 201 of FIG. 5), a display (e.g., the display 230 of FIG. 5), and a protective member 300 that protects the edge of the display 230.

According to an embodiment, the protective member 300 may include a cover portion 710 and an injection-molded portion 720. A portion of the injection-molded portion 720 may be disposed inside the housing 201, and another portion thereof may be disposed along the front surface of the edge of the display 230. The cover portion 710 may be disposed above the injection-molded portion to form a portion of the exterior of the electronic device 101.

According to an embodiment, in the process of forming the protective member 300, a sheet- or plate-shaped material before being formed into the cover portion 710 may be referred to as a cover primer (or base) 710a. In the process of forming the protective member 300, a sheet- or plate-shaped material before being formed into the injection-molded portion 720 may be referred to as an injection-molded primer (or base) 720a.

In process 5010, a first mold P1 may be prepared. The first mold P1 may include a first cavity C1 for forming an upper portion of the protective member 300. The shape of the first cavity C1 may provide a space considering the overall length in the electronic device 101 so that one end thereof covers the display 230 and the other end is positioned on the side wall of the housing 201.

In process 5020, a cover primer 710a may be seated in the first cavity C1 of the first mold P1. The cover primer 710a may be bonded with a resin to be injected into the mold later, and may form a front surface of the protective member 300. The cover primer 710a may be at least one of a GFRP, a CFRP, an AFRP, a BFRP, a NFRP, a PET, PC, or PBT.

In process 5030, the first mold P1 and a second mold P2 may be coupled. The second mold P2 may include a second cavity C2 for forming a lower portion of the protective member 300. The shape of the second cavity C2 may include a protruding shape for coupling with the side wall of the housing 201. In a state in which the first mold P1 and the second mold P2 are coupled to each other, the resin may be injected into the first and second cavities C1 and C2. A material (epoxy resin, polyester resin, acrylic resin, polyurethane resin or polycarbonate resin) or laser direct structuring (LDS) resin (e.g., polyphenylene sulfide (PPS) resin or liquid crystal polymer (LCP) resin) may be used as the resin injected into the first and second cavities C1 and C2.

After the cooling and curing process in process 5040, the injection-molded material may be removed from the first mold P1 and the second mold P2, and then the protective member 300 may be completed through final processing. The protective member 300 is a structure in which the cover portion 710 is coupled to the upper side of the injection-molded portion 720, and the injection-molded portion 720 coupled and supported by the housing 201 has rigidity, and the cover portion 710, which comes in contact the user, may provide soft surface quality.

In general, an electronic device (e.g., a foldable electronic device) including a flexible display may include a plurality of housings and a deco (e.g., a protective member) disposed on the edge of the housing. The decos may collide with each other in the folding operation of the foldable electronic device, and in this case, friction noise (or squeaky noise) may occur or the deco surface may be easily damaged. Further, when an elastic structure, such as a rubber damper, is disposed on one side of the protective member to prevent friction noise, the rubber damper may lead to an increase in the overall thickness of the electronic device or cause design deterioration.

An electronic device according to an embodiment of the disclosure may provide a protective member in which a plurality of fiber laminates are laminated. As the friction noise (or squeaky noise) is reduced even without a separate structure formed of an elastic material, the protective member may stably protect the display and provide an aesthetic design. Further, the removal of a separate structure formed of an elastic material may lead to a reduction in the thickness of the electronic device.

An electronic device according to an embodiment of the disclosure may provide a protective member in which a plurality of fiber laminates are laminated. The protective member may provide high specific strength and high strength compared to a generally used material (e.g., PC), thereby reducing surface damage.

In the electronic device according to an embodiment of the disclosure, the protective member provides a high-gloss surface corresponding to the display, visually reducing the boundary between the display and the peripheral frame (e.g., the protective member), so that the display may be shown wider to the user when the display is in the off state. Further, the high-gloss surface may make the display screen look brighter and clearer with the surrounding reflection effect while the display is on, and may provide a unified design as a whole. Further, the high-gloss surface may make the electronic device feel luxurious and modem, and may provide a user experience such as a good touch.

In the electronic device according to an embodiment of the disclosure, the protective member may include a first fiber-reinforced portion in which fibers having a first thickness are laminated and a second fiber-reinforced portion in which fibers having a second thickness smaller than the first thickness are laminated. The first fiber-reinforced portion coupled to the housing supports the protective member as a whole through strong strength, and the thin second fiber-reinforced portion may provide soft quality of surface which is to contact the user.

In the electronic device according to an embodiment of the disclosure, the protective member includes a glossy flat surface and a matte inclined surface, and the flat surface forming the high-gloss surface may be visually more prominent (e.g., more visible) as a difference occurs in gloss level compared to the inclined surface.

Effects obtainable from the disclosure are not limited to the above-mentioned effects, and other effects not mentioned may be apparent to one of ordinary skill in the art from the following description.

A foldable electronic device 101 according to an embodiment of the disclosure may comprise a housing 201 including a first housing component 210 and a second housing component 220, a hinge 202 rotatably connecting the first housing component and second housing component 220, a flexible display 230 supported by the first housing component 210 and the second housing component 220, a first protective member 300a disposed on the first housing component 210 to cover a first edge portion of the flexible display 230, and a second protective member 300b disposed on the second housing component 220 to cover a second edge portion of the flexible display 230. The first protective member 300a may comprise a first fiber-reinforced portion 310 including a plurality of first fiber layers 317 laminated together, each of the first fiber layers 317 having a first thickness d1, and a second fiber-reinforced portion 320 extending from the first fiber-reinforced portion, the second fiber-reinforced portion 320 including a plurality of second fiber layers 327 laminated together, each of the second fiber layers 327 having a second thickness d2 smaller than the first thickness. The second protective member 300b may comprise a third fiber-reinforced portion including a plurality of third fiber layers laminated together and a fourth fiber-reinforced portion extending from the third fiber-reinforced portion, the fourth fiber-reinforced portion including a plurality of fourth fiber layers laminated together. This configuration allows a noise damper to be omitted and it leads to reduced thickness of the electronic device.

According to an embodiment, when the foldable electronic device 101 is folded, the second fiber-reinforced portion 320 of the first protective member 300a and the fourth fiber-reinforced portion of the second protective member 300b may be formed to contact each other.

All claims that describe features with respect to only the first protective member 300a may also be redefined for the second protective member 300b.

According to an embodiment, the first thickness d1 of each of the first fiber layers 317 of the first fiber-reinforced portion 310 of the first protective member 300a may be two to four times greater than the second thickness d2 of each of the second fibers layers 327 of the second fiber-reinforced portion 320 of the first protective member 300a. This allows the use of materials with different softness or hardness for the first fiber-reinforced portion and the second fiber-reinforced portion. Additionally, the surface quality of the externally visible second fiber-reinforced portion is enhanced.

According to an embodiment, the first protective member 300a may further comprise a first coating layer 330 formed to surround an outer surface of the second fiber-reinforced portion 320 of the first protective member 300a. The coating layer protects the surface of the first protective member and may further be formed to be aesthetically pleasing.

According to an embodiment, the second protective member 300b may further comprise a second coating layer formed to surround an outer surface of the fourth fiber-reinforced portion of the second protective member 300b. The coating layer protects the surface of the second protective member.

According to an embodiment, at least a portion of the first coating layer 330 of the first protective member 300a or the second coating layer of the second protective member 300b may form a high-gloss surface corresponding to the flexible display 230.

According to an embodiment, a front surface 323 of the second fiber-reinforced portion 320 of the first protective member 300a may include a flat surface 323a parallel to the flexible display 230, and an inclined surface (323b, 323c) inclined toward the flexible display 230 with respect to the flat surface 323a. This causes less gradient or less sharp edges and thereby less dust and dirt are collected in the corners during extended use.

According to an embodiment, the first coating layer 330 of the first protective member 300a may include a glossy layer disposed on the flat surface 323a of the second fiber-reinforced portion 320 of the first protective member 300a, and a matte layer disposed on the inclined surface (323b, 323c) of the second fiber-reinforced portion 320 of the first protective member 300a. This configuration allows reducing glare at the edges of the flexible display while maintaining a vibrant and clear image quality in the center of the flexible display.

According to an embodiment, the first fiber layers 317 of the first fiber-reinforced portion 310 of the first protective member 300a and/or the second fiber layers 327 of the second fiber-reinforced portion 320 of the first protective member 300a may include at least one of a glass fiber reinforced polymer (GFRP), a carbon fiber reinforced polymer (CFRP), an aramid fiber reinforced polymer (AFRP), a basalt fiber reinforced polymer (BFRP), or a natural fiber reinforced polymer (NFRP).

According to an embodiment, the first thickness d1 of each of the first fiber layers 317 of the first fiber-reinforced portion 310 may be 0.07 mm to 0.13 mm, and the second thickness d2 of each of the second fiber layers 327 of the second fiber-reinforced portion 320 may be 0.01 mm to 0.05 mm. The second fiber-reinforced portion 320 having the second thickness may be configured so that a shape of a fiber is not visible when viewed from an outside.

According to an embodiment, a first length L1 of the first fiber-reinforced portion 310, in which each of the first fiber layers 317 having the first thickness d1 are laminated, may be greater than a second length L2 of the second fiber-reinforced portion 320, in which each of the second fiber layers 327 having the second thickness d2 are laminated.

According to an embodiment, a first width w1 substantially perpendicular to the first length L1 of the first fiber-reinforced portion 310 may be shorter than a second width w2 substantially perpendicular to the second length L2 of the second fiber-reinforced portion 320.

According to an embodiment, the first length L1 of the first fiber-reinforced portion 310 of the first protective member 300a may be two to five times the second length L2 of the second fiber-reinforced portion 320 of the first protective member 300a. This allows the protective member to be stably connected to the housing while still reducing the thickness as much as possible.

According to an embodiment, a boundary portion may be formed between the first fiber-reinforced portion 310 and the second fiber-reinforced portion 320 of the first protective member 300a as a curved surface 401. The boundary portion may be formed of a blocking layer 402. The blocking layer may prevent or reduce any electrostatic discharge of the flexible display. The blocking layer may protect the flexible display from electrostatic discharge.

According to an embodiment, when viewed from above the flexible display 230, a portion of the second fiber-reinforced portion 320 of the first protective member 300a may overlap an edge of a front surface of the flexible display 230. This configuration provides protection to the edge of the flexible display.

According to an embodiment, one end 322 of the second fiber-reinforced portion 320 of the first protective member 300a may extend toward the flexible display 230, and another end 321 of the second fiber-reinforced portion 320 of the first protective member 300a may extend toward a side wall 209b of the housing 201.

According to an embodiment, one end of the first fiber-reinforced portion 310 of the first protective member 300a may be spaced apart from the flexible display 230, and another end of the first fiber-reinforced portion 310 of the first protective member 300a may be coupled to the housing 201.

According to an embodiment, a rear region of the first fiber-reinforced portion 310 of the first protective member 300a may be inserted and fixed into a recess 209a adjacent to a side wall 209b of the housing 201. According to an embodiment, the recess 209a may be adjacent to a side wall 209b of the first housing component 210.

According to an embodiment, the first fiber-reinforced portion 310 and the second fiber-reinforced portion 320 of the first protective member 300a may be formed as a monolithic body in which the first fiber-reinforced portion 310 and the second fiber-reinforced portion 320 of the first protective member 300a are laminated to each other. This configuration increases the stability of the resulting structure.

According to an embodiment, in an unfolded state of the foldable electronic device, the first protective member 300a and the second protective member 300b may be arranged parallel and spaced apart from each other, and in a folded state of the foldable electronic device, the first protective member 300a and the second protective member 300b may be arranged to face each other and be formed to at least partially contact each other.

A foldable electronic device 101 according to an embodiment may comprise a housing 201 including a first housing component 210 and a second housing component 220, a hinge 202 connecting the first housing component 210 and second housing component 220 so that the second housing component 220 is rotatable about the first housing component 210, a flexible display 230 supported by the first housing component 210 and the second housing component 220, a first protective member 300a disposed on the first housing component 210 to cover a first edge portion of the flexible display 230, and a second protective member 300b disposed on the second housing component 220 to cover a second edge portion of the flexible display 230. At least one of the first protective member 300a or the second protective member 300b may include a first portion 301 positioned inside the housing and including a first material and a second portion 302 extending from one end of the first portion 301, forming an exterior of the electronic device, and including a second material different from the first member.

According to an embodiment, the first portion 301 may include a fiber-reinforced portion in which first fiber layers 317 each having a first thickness d1 are laminated, and the second portion 302 may include an injection-molded material.

According to an embodiment, the first fiber layers 317 of the first portion 301 may include at least one of a glass fiber reinforced polymer (GFRP), a carbon fiber reinforced polymer (CFRP), an aramid fiber reinforced polymer (AFRP), a basalt fiber reinforced polymer (BFRP), or a natural fiber reinforced polymer (NFRP), and the second portion may include at least one of polyethylene terephthalate (PET), polycarbonate (PC), or polybutylene terephthalate (PBT).

According to an embodiment, at least one of the first protective member 300a or the second protective member 300b may further include a coating layer 330 formed to surround an outer surface of the second portion 302. At least a portion of the coating layer may form a high-gloss surface corresponding to the flexible display 230.

According to an embodiment, one end 322 of the second portion 302 may extend toward a side of the flexible display 230, and another end 321 of the second portion 302 may extend toward a side wall of the housing 201.

According to an embodiment, one end of the first portion 301 may be disposed to be spaced apart from the display 230, and another end of the first portion may be coupled to the housing 201.

## Claims

1. A foldable electronic device (101) comprising:
a housing (201) including a first housing component (210) and a second housing component (220);
a hinge (202) rotatably connecting the first housing component (210) and second housing component (220);
a flexible display (230) supported by the first housing component (210) and the second housing component (220);
a first protective member (300a) disposed at the first housing component (210) to cover a first edge portion of the flexible display (230); and
a second protective member (300b) disposed at the second housing component (220) to cover a second edge portion of the flexible display (230),
wherein the first protective member (300a) comprises:
a first fiber-reinforced portion (310) including a plurality of first fiber layers (317) laminated together, each of the first fiber layers (317) having a first thickness (d1); and
a second fiber-reinforced portion (320) extending from the first fiber-reinforced portion (310), the second fiber-reinforced portion (320) including a plurality of second fiber layers (327) laminated together, each of the second fiber layers (327) having a second thickness (d2) smaller than the first thickness,
wherein the second protective member (300b) comprises:
a third fiber-reinforced portion including a plurality of third fiber layers laminated together; and
a fourth fiber-reinforced portion extending from the third fiber-reinforced portion, the fourth fiber-reinforced portion including a plurality of fourth fiber layers laminated together,
wherein when the foldable electronic device (101) is folded, the second fiber-reinforced portion (320) of the first protective member (300a) and the fourth fiber-reinforced portion of the second protective member (300b) are configured to contact each other.

2. The foldable electronic device (101) of claim 1,
wherein the first thickness (d1) of each of the first fiber layers (317) of the first fiber-reinforced portion (310) of the first protective member (300a) is two to four times greater than the second thickness (d2) of each of the second fiber layers (327) of the second fiber-reinforced portion (320) of the first protective member (300a).

3. The foldable electronic device (101) of claim 1 or 2,
wherein the first protective member (300a) further comprises a first coating layer (330) configured to surround an outer surface of the second fiber-reinforced portion (320) of the first protective member (300a), and
wherein the second protective member (300b) further comprises a second coating layer configured to surround an outer surface of the fourth fiber-reinforced portion of the second protective member (300b).

4. The foldable electronic device (101) of claim 3, wherein at least a portion of the first coating layer (330) of the first protective member (300a) or the second coating layer of the second protective member (300b) forms a high-gloss surface corresponding to the flexible display (230).

5. The foldable electronic device (101) of any one of claims 1 to 4,
wherein a front surface (323) of the second fiber-reinforced portion (320) of the first protective member (300a) includes a flat surface (323a) parallel to the flexible display (230), and an inclined surface (323b, 323c) inclined toward the flexible display (230) with respect to the flat surface (323a).

6. The foldable electronic device (101) of claim 5,
wherein the first coating layer (330) of the first protective member (300a) includes a glossy layer arranged on the flat surface (323a) of the second fiber-reinforced portion (320) of the first protective member (300a), and a matte layer arranged on the inclined surface (323b, 323c) of the second fiber-reinforced portion (320) of the first protective member (300a).

7. The foldable electronic device (101) of any one of claims 1 to 6,
wherein the first fiber layers (317) of the first fiber-reinforced portion (310) of the first protective member (300a) and/or the second fiber layers (327) of the second fiber-reinforced portion (320) of the first protective member (300a) includes at least one of a glass fiber reinforced polymer, GFRP, a carbon fiber reinforced polymer, CFRP, an aramid fiber reinforced polymer, AFRP, a basalt fiber reinforced polymer, BFRP, or a natural fiber reinforced polymer, NFRP.

8. The foldable electronic device (101) of any one of claims 1 to 7,
wherein the first thickness (d1) of each of the first fiber layers (317) of the first fiber-reinforced portion (310) is 0.07 t(mm) to 0.13 t(mm), the second thickness (d2) of each of the second fiber layers (327) of the second fiber-reinforced portion (320) is 0.01 t(mm) to 0.05 t(mm), and the second fiber-reinforced portion (320) having the second thickness is configured so that the shape of the fiber is not visible when viewed from the outside.

9. The foldable electronic device (101) of any one of claims 1 to 8,
wherein a first length (L1) of the first fiber-reinforced portion (310), in which each of the first fiber layers (317) having the first thickness (d1) are laminated, is greater than the second length (L2) of the second fiber-reinforced portion (320), in which each of the second fiber layers (327) having the second thickness (d2) are laminated, and
wherein the first width (w1) substantially perpendicular to the first length (L1) of the first fiber-reinforced portion (310) is less than the second width (w2) substantially perpendicular to the second length (L2) of the second fiber-reinforced portion (320).

10. The foldable electronic device (101) of claim 9,
wherein the first length (L1) of the first fiber-reinforced portion (310) of the first protective member (300a) is two to five times the second length (L2) of the second fiber-reinforced portion (320) of the first protective member (300a).

11. The foldable electronic device (101) of any one of claims 1 to 10,
wherein a boundary portion is formed between the first fiber-reinforced portion (310) and the second fiber-reinforced portion (320) of the first protective member (300a) as a curved surface (401).

12. The foldable electronic device (101) of any one of claims 1 to 11,
wherein when viewed from above the flexible display (230), a portion of the second fiber-reinforced portion (320) of the first protective member (300a) overlaps an edge of a front surface of the flexible display (230).

13. The foldable electronic device (101) of any one of claims 1 to 12,
wherein one end (322) of the second fiber-reinforced portion (320) of the first protective member (300a) extends toward the flexible display (230), the other end (321) of the second fiber-reinforced portion (320) of the first protective member (300a) extends toward a side wall (209b) of the housing (201), and
wherein one end of the first fiber-reinforced portion (310) of the first protective member (300a) is spaced apart from the flexible display (230), and the other end of the first fiber-reinforced portion (310) of the first protective member (300a) is coupled to the housing (201).

14. The foldable electronic device (101) of any one of claims 1 to 13,
wherein a rear region of the first fiber-reinforced portion (310) of the first protective member (300a) is inserted and fixed into a recess (209a) adjacent to a side wall (209b) of the housing (201).

15. The foldable electronic device (101) of any one of claims 1 to 14,
wherein the first fiber-reinforced portion (310) and the second fiber-reinforced portion (320) of the first protective member (300a) are formed as a monolithic body laminated to each other.
